Europäisches Patentamt

European Patent Office

Office européen des brevets

(19)

(11) **EP 0 751 483 B1**

(12) **FASCICULE DE BREVET EUROPEEN**

(45) Date de publication et mention
de la délivrance du brevet:
**02.05.2003   Bulletin 2003/18**

(51) Int Cl.⁷: **G06T 5/00**

(21) Numéro de dépôt: **96201775.2**

(22) Date de dépôt: **26.06.1996**

(54) **Procédé de filtrage temporel du bruit dans une image d'une séquence d'images numériques et dispositif mettant en oeuvre ce procédé**

Verfahren und Vorrichtung zur temporären Rauschfilterung einer Bildfolge

Method and apparatus for temporal filtering of noise in an image sequence

(84) Etats contractants désignés:
**DE FR GB NL**

(30) Priorité:  **30.06.1995   FR 9507889**

(43) Date de publication de la demande:
**02.01.1997   Bulletin 1997/01**

(73) Titulaire: **Koninklijke Philips Electronics N.V.
5621 BA Eindhoven (NL)**

(72) Inventeurs:
• **Bernard, Franck
75008 Paris (FR)**
• **Florent, Raoul
75008 Paris (FR)**

(74) Mandataire: **Lottin, Claudine et al
Société Civile S.P.I.D.
156, Boulevard Haussmann
75008 Paris (FR)**

(56) Documents cités:
**EP-A- 0 512 422**

• **IEEE TRANSACTIONS ON SIGNAL
PROCESSING, vol. 39, no. 5, Mai 1991, USA,
pages 1146-1163, XP002016550 ARCE G R:
"Multistage Order Statistic Filters for Image
Sequence Processing."**

**Description**

**FIELD OF THE INVENTION**

L'invention concerne un procédé de filtrage temporel du bruit dans une image d'une séquence d'images numériques, ainsi qu'un dispositif pour mettre en oeuvre ce procédé.

L'invention trouve particulièrement son application dans le traitement d'images médicales formées dans un mode fluoroscopique de rayons X, au moyen d'un système où le faisceau de rayons X a une faible intensité, fournissant sous forme de séquence des images bruitées et peu contrastées qui doivent être filtrées afin d'en extraire le bruit, sans en détériorer les détails.

Le filtrage temporel consiste à lisser un signal monodimensionnel appelé signal temporel, constitué par les valeurs d'intensité d'un pixel ayant une localisation donnée dans les images de la séquence, en fonction du temps.

**BACKGROUND OF THE INVENTION**

Un procédé de filtrage temporel est déjà connu par la publication de R.E.KALMAN, intitulée "A new approach to linear filtering and prediction problems" dans "Transactions of the ASME, Journal of Basic Engineering, Series 82D, pp. 35-45, 1960.

Le filtrage de Kalman est défini par une équation récursive donnant l'intensité filtrées d'un pixel courant d'une image de la séquence en fonction d'hypothèses faites A PRIORI, en fonction de l'intensité du pixel de même localisation dans l'image précédente de la séquence et en fonction d'un facteur appelé gain de Kalman.

Cette équation peut conduire à deux algorithmes récursifs. Un problème est que, dès qu'il se produit un petit mouvement entre deux images, ce mouvement donne lieu à un front montant ou descendant, appelé discontinuité d'intensité, apparaissant sur la courbe dudit signal temporel à lisser.

Dans le premier algorithme, le gain de Kalman est choisi complètement constant : il en résulte un traînage exponentiel affectant ledit front de discontinuité d'intensité résultant d'un mouvement. Ainsi, dans l'image d'origine bruitée, un petit objet, comme par exemple un cathéter, qui aurait bougé rapidement donnant lieu à un créneau du signal d'intensité, peut avoir disparu de l'image filtrée parce que les flancs du créneau sont déformés par le filtrage. Cet algorithme efface les petits objets.

Dans le second algorithme, le gain de Kalman est une fonction de la différence entre l'intensité bruitée observée à un instant donné et l'intensité filtrée à l'instant précédent, pour un pixel de localisation donnée. Il en résulte que le signal temporel est lissé avant la discontinuité, mais que, par contre, il n'est plus filtré après la discontinuité ; il existe donc un legs de bruit après le front de discontinuité d'intensité.

Le filtrage temporel connu a donc le désavantage de ne pas pouvoir être appliqué efficacement à une séquence d'images fortement bruitées représentant des petits objets animés.

Ainsi, le filtrage temporel connu ne résout pas certains problèmes importants qui se posent lorsque le filtrage temporel est appliqué à une séquence d'images obtenues en mode fluoroscopique de rayons X, utilisée, par exemple, pour suivre en temps réel une opération médicale durant laquelle un outil de diamètre extrêmement petit, tel qu'un cathéter, est introduit ou déplacé dans la zone observée.

**SUMMARY OF THE INVENTION**

Un problème est que, dû à la très faible intensité du faisceau fluoroscopique de rayons X les images de la séquence sont extrêmement bruitées, et contiennent fréquemment des pics de bruit.

Un autre problème est que, dû au fait que chaque image de la séquence est séparée de la suivante par un petit laps de temps, un événement important comme le déplacement d'un petit outil tel qu'un cathéter, peut survenir d'une image à l'autre. Le filtrage de l'image où apparaît le mouvement de ce petit objet ne doit pas déformer ou effacer cet objet.

La présente invention vise à fournir un procédé de filtrage temporel pour la réduction du bruit, dans les images successives d'une séquence d'images numérisées :

-    qui travaille substantiellement en temps réel, c'est-à-dire avec un retard très petit, imperceptible pour un opérateur suivant la séquence d'images, compte tenu de la cadence de production des images dans la séquence,

    qui réduise les legs de bruit suivant un front de discontinuité du signal temporel d'intensité, sans amortir le front de discontinuité ;
    qui soit capable de différentier les pics de bruit des variations du signal temporel dues à des mouvements réels, et qui réduise les pics de bruits ;

**EP 0 751 483 B1**

qui n'efface pas et ne déforme pas les petits objets en mouvement.

Ces buts sont atteints au moyen d'un procédé de filtrage temporel du bruit dans une image appelée image du présent, d'une séquence d'images en forme de matrice bidimensionnelle de pixels, lesquels ont des valeurs d'intensité, appelées échantillons, bruitées numérisées,

ce procédé comprenant l'évaluation d'un échantillon filtré appelé échantillon anticausal du présent pour reconstruire un échantillon bruité correspondant à un pixel de localisation (x,y) donné dans l'image du présent, par une combinaison linéaire appelée anticausale d'un échantillon filtré du présent, appelé échantillon causal filtré du présent, obtenu par un filtrage temporel linéaire préliminaire, appelé causal associé à des coefficients et d'un échantillon bruité ultérieur audit échantillon bruité du présent, appelé échantillon bruité anticausal, ces échantillons étant affectés de poids calculés respectivement comme des fonctions d'un facteur appelé facteur de gain causal évalué comme l'inverse de la somme de coefficients associés au filtrage linéaire causal, et d'un coefficient appelé coefficient de continuité anticausal associé à l'échantillon anticausal évalué comme une probabilité de continuité d'intensité entre ledit échantillon anticausal et un échantillon filtré antérieur dans la séquence.

Un dispositif mettant en oeuvre ce procédé comprend :

un système de traitement d'images pour fournir une intensité numérisée bruitée appelée échantillon du présent bruité, d'un pixel ayant une localisation donnée (x,y) dans une image ayant la forme d'une matrice de pixels arrivant à cet instant du présent (t), et l'intensité bruitée du pixel ultérieur au pixel du présent, appelé échantillon anti-causal de même localisation (x,y) dans la matrice de l'image ultérieure,
un premier sous-ensemble, appelé sous-ensemble causal, recevant à son entrée l'échantillon bruité du présent, et ayant des moyens de filtrage linéaire avec des poids pour évaluer, et pour fournir à une sortie, une première valeur filtrée appelée échantillon causal filtré de l'échantillon du présent, à une autre sortie un échantillon filtré de l'instant précédent, et à une autre sortie un facteur de gain causal égal à l'inverse des poids de ce filtrage linéaire,
et un second sous-ensemble, appelé sous-ensemble anticausal recevant à une entrée, l'échantillon causal filtré de l'instant précédent, à une autre entrée l'échantillon causal filtré du présent, et à une autre entrée l'échantillon anticausal bruité, et ayant des moyens de calcul pour évaluer avec le facteur de gain causal la relation d'intégration anti-causale et pour fournir à sa sortie une seconde valeur appelée échantillon anticausal filtré qui est l'échantillon filtré pour reconstruire l'échantillon du présent bruité.

Ce dispositif offre l'avantage d'être simple à mettre en oeuvre et de fournir substantiellement en temps réel un filtrage temporel du bruit efficace qui ne détruit pas les détails de l'image.

## BRIEF DESCRIPTION OF THE DRAWINGS

L'invention est décrite ci-après en détail, en référence avec les figures schématiques annexées dont :

la FIG.1 qui représente un dispositif de prises de vues à rayons X ;
la FIG.2 qui représente une séquence d'images numériques ;
la FIG.3A qui représente un signal temporel bruité avec une discontinuité d'intensité due à un mouvement ;
la FIG.3B qui représente un autre signal temporel bruité, avec un pic de bruit ;
la FIG.3C qui illustre la détermination de l'écart type du bruit ;
la FIG.4A qui représente le signal temporel filtré correspondant au signal temporel bruité de la FIG.3A dans une première réalisation de l'invention ;
la FIG.4B qui représente le signal temporel filtré correspondant au signal bruité de la FIG.3B dans la première réalisation de l'invention ;
la FIG.4C qui représente le signal temporel de la FIG.3A filtré dans une variante de cette première réalisation ;
la FIG.5A qui représente le signal temporel filtré correspondant au signal temporel bruité de la FIG.3A dans une seconde réalisation de l'invention ;
la FIG.5B qui représente le signal temporel filtré correspondant au signal temporel bruité de la FIG.3B dans la seconde réalisation de l'invention
la FIG.5C qui représente le signal temporel de la FIG.3B filtré dans une variante de cette seconde réalisation ;
les FIG.6A à 6D qui montrent divers exemples possibles de fonction F ;
les FIG.7A et 7B qui montrent sous forme de blocs fonctionnels, un dispositif pour mettre en oeuvre le procédé de filtrage temporel avec une composante causale et une composante anticausale.

## DESCRIPTION OF PREFERRED EMBODIMENTS

### I/ Dispositif à rayons X

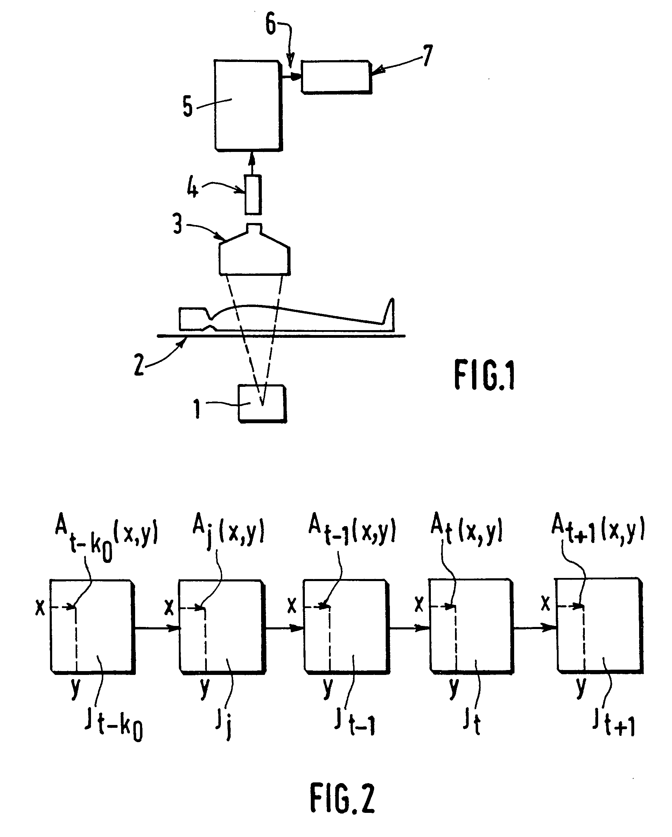

En référence avec la FIG.1, un système de radiographie numérisée comprend une source de rayons X ; une table mobile 2 pour recevoir un patient ; un dispositif intensificateur d'image 3 couplé à un tube vidéo 4, qui fournit des données à un système 5 de traitement numérique d'image comprenant un microprocesseur. Ce dernier comprend plusieurs sorties dont une sortie 6 couplée à un moniteur 7 pour la visualisation de la séquence d'images radiographiques ou des images d'intensité.

L'image radiographique numérisée peut contenir 512 x 512 ou 1024 x 1024 pixels codés sur 8bits ou 10 bits. Chaque pixel peut être ainsi affecté d'un parmi 256 ou 1024 niveaux d'intensité. Par exemple, les régions sombres ont un niveau d'intensité faible, et les régions claires de l'image ont un niveau d'intensité élevé.

L'image numérisée peut être obtenue en mode fluoroscopique. L'invention peut trouver son application particulièrement dans le filtrage d'images angiographiques.

Dans tous les cas, la présente invention ne tient pas compte de la méthode par laquelle la séquence d'images numériques a été obtenue, ni de la nature des objets qu'elle représente, mais concerne seulement le filtrage de ces images dans cette séquence pour éliminer le bruit.

### II/ procédé de filtrage temporel du bruit.

La présente invention propose un procédé de filtrage temporel du bruit successivement de chaque image d'une séquence d'images numériques bruitées. Ce procédé opère le filtrage de l'avant dernière image bruitée observée. Ce procédé est donc substantiellement mené à bien en temps réel.

Ce procédé est capable d'effectuer la détection de mouvement d'objets enregistrés sur les images de la séquence. Il est fondé partiellement sur des étapes de filtrage récursif adaptatif.

En référence avec la figure 2, le procédé de filtrage temporel du bruit comporte d'abord l'acquisition et la numérisation d'une séquence d'images bruitées, réalisée à une cadence donnée.

Cette séquence est composée, de l'instant le plus éloigné dans le passé, jusqu'à l'instant le plus récent :

d'un nombre d'images d'intensité du passé, notées $J_C^j$ appelées "images causales", formées depuis le premier instant $j = t-k_o$, où $k_o$ est un nombre entier égal au nombre d'images de la séquence moins deux, jusqu'à l'instant $j = t-1$, où $t$ est l'instant où arrive l'image en cours de filtrage ;

d'une image $J_P^t$ en cours de filtrage, appelée image du présent, arrivant à l'instant $j = t$,

et d'une image supplémentaire $J_{t+1}^A$, appelée image anti-causale ou du futur, arrivant à un instant ultérieur $j = t+1$.

L'image du présent $J_P^t$ est filtrée en réalité juste après cet instant ultérieur $t+1$, c'est-à-dire avec un petit retard par rapport à l'instant où elle est arrivée.

Chaque image numérisée bruitée $J_j$ est une matrice bidimensionnelle de pixels notés $A_j (x, y)$, caractérisé chacun par ses coordonnées $x, y$ dans la matrice et par un niveau d'intensité $I_j(x, y)$ sur une échelle de niveaux d'intensité, où $j$ est l'indice correspondant à celui de l'image.

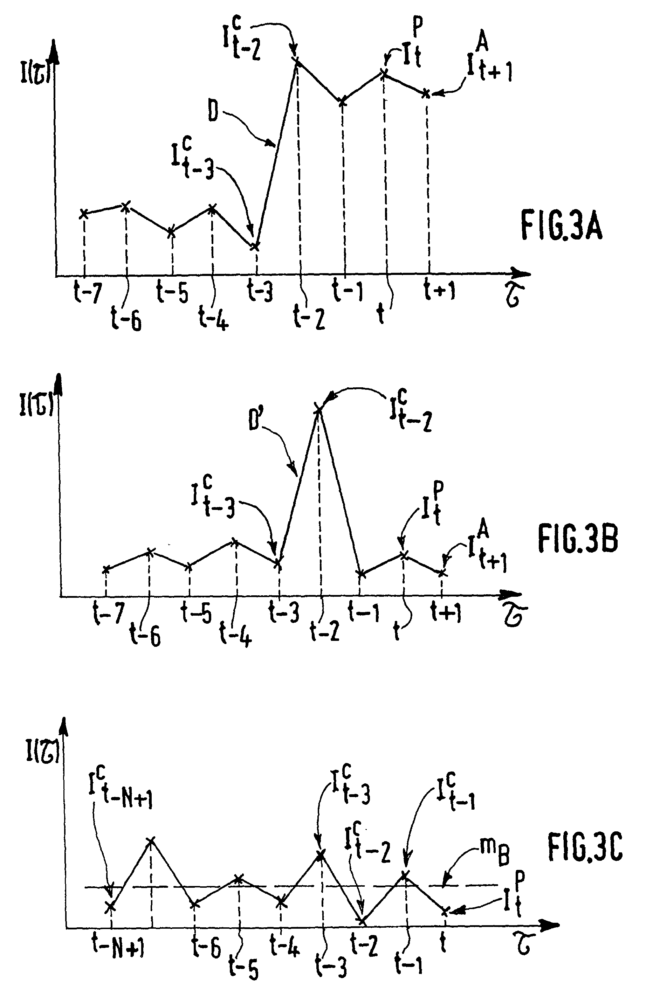

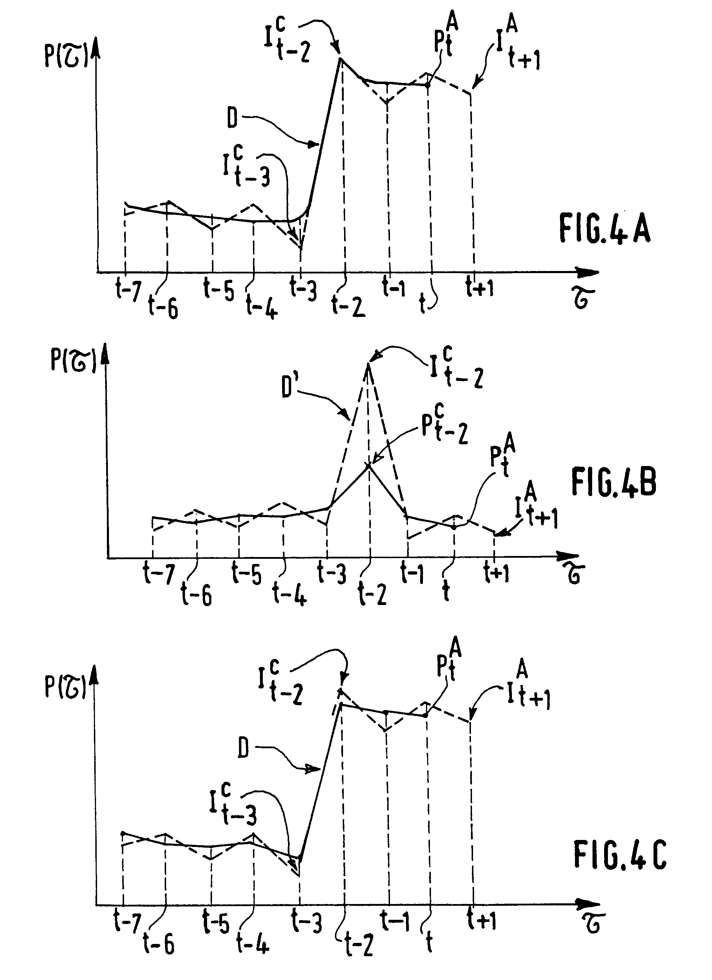

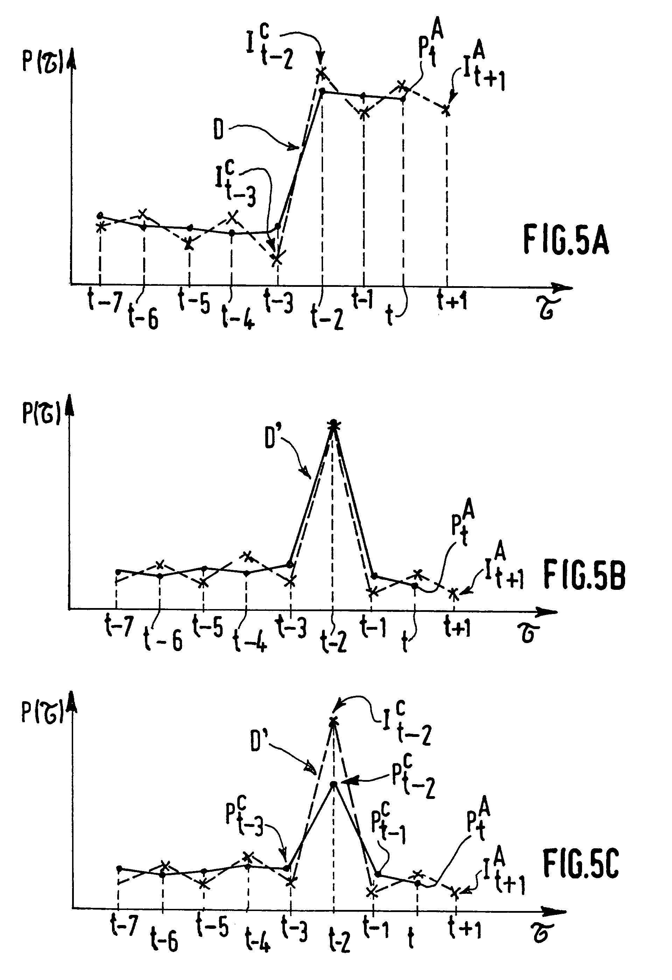

Un signal, appelé signal temporel bruité, est formé des différents niveaux d'intensité $I_j (x, y)$ des pixels $A_j (x, y)$ en fonction du temps $\tau$ (lire tau), comme représenté sur les FIG.3A, 3B et 3C, où $I_j(x,y)$ est porté en ordonné et $\tau$ en abscisse. Le procédé de filtrage temporel selon l'invention a pour objet le filtrage ou lissage du bruit qui affecte ce signal temporel noté $I(\tau)$, de manière à obtenir un signal temporel filtré, noté $P(\tau)$, comme représenté sur les FIG.4 ou 5. On appelle ci-après "échantillons" ces intensités qui sont les points du signal temporel $I(\tau)$.

Le procédé selon l'invention s'applique au cas où les grands mouvements se produisant dans la séquence d'image ont déjà été compensés par des méthodes de compensation de mouvement connus de l'état de la technique.

Ce procédé effectue un filtrage du bruit du signal temporel $I(\tau)$ en traitant les petits mouvements locaux résiduels ou non compensables des objets dans la séquence d'image.

Ce procédé effectue un filtrage de l'échantillon bruité $I_P^t$ arrivé à l'instant du présent $t$, et construit un échantillon filtré $P_P^t$ en utilisant l'échantillon bruité $I_P^t$ du présent $t$, les échantillons antérieurs appelés échantillons causals bruités $I_{t-k0}^C, \ldots I_{t-3}^C, I_{t-2}^C, I_{t-1}^C$, observés aux instants du passé de $t-k_o$ à $t-1$, et l'échantillon suivant appelé échantillon anticausal bruité $I_{t+1}^A$ observé à l'instant ultérieur $t+1$, appelé futur, qui est l'instant après lequel a réellement lieu le traitement de $I_P^t$.

Le filtrage temporel est effectué favorablement pour chaque pixel $A_j (x, y)$ de la matrice bidimensionnelle, aux différentes coordonnées $x, y$, individuellement.

La figure 3A montre un signal temporel $I(\tau)$ bruité ayant, à titre d'exemple, une discontinuité d'intensité D entre l'échantillon $I_{t-3}^C$ et l'échantillon $I_{t-2}^C$ due à un petit mouvement local. Ce petit mouvement se traduit par un front de montée du signal temporel $I(\tau)$ entre l'instant $t-3$ et l'instant $t-2$, un "haut plateau" de signal entre les instants $t-2$ et $t+1$,

et une "plaine basse" aux instants précédant l'instant t-3.

Ce signal temporel montre en outre des petites dents de scie entre les instants t-7 et t-3, car, dû au bruit, le niveau d'intensité d'un pixel de mêmes coordonnées (x,y) dans les images de la séquence varie constamment, provoquant un aspect de chute de neige. Le filtrage permet de supprimer cet aspect en lissant à une valeur moyenne constante le signal temporel $I(\tau)$ relatif à un pixel donné.

Le filtrage temporel selon l'invention est capable de s'adapter à une discontinuité d'intensité telle que D. Ainsi, les FIG.4A, 4C et 5A montrent le signal temporel $P(\tau)$ lissé par le procédé selon l'invention dans diverses formes de réalisation.

La FIG.3B montre un signal temporel bruité $I(\tau)$ ayant à titre d'exemple un pic de bruit D' apparaissant entre les instants t-3 et t-1, c'est-à-dire à l'instant t-2. Un tel pic de bruit D' se distingue d'une discontinuité d'intensité telle que D de la FIG.3A par le fait qu'il ne correspond pas à un phénomène de mouvement spatial réel. Un tel pic de bruit peut être filtré par le procédé proposé selon l'invention.

L'échantillon filtré $P_t^A$ correspondant à l'échantillon bruité du présent $I_t^P$ s'exprime par la relation (1) :

$$P_t^A = \frac{\sum\limits_{j=t-k_o}^{j=t-1} b_j^C \times I_j^C + I_t^P + b_{t+1}^A \times I_{t+1}^A}{\sum\limits_{j=t-k_o}^{j=t-1} b_j^C + 1 + b_{t+1}^A} \qquad (1)$$

L'échantillon filtré $P_t^A$, ou signal temporel filtré à l'instant t, est une combinaison linéaire des échantillons bruités observés aux instants causals de $j = t-k_o$ jusqu'à $j = t-1$, de l'échantillon bruité observé à l'instant du présent t, et de l'échantillon bruité observé à l'instant anticausal ou du futur t+1.

Dans la formule (1) du signal filtré $P_t^A$, on affecte aux échantillons causals $I_{t-1}^C$, $I_{t-2}^C$ etc.., et anticausals $I_{t+1}^A$, un coefficient ou poids $b_j^C$, et $b_{t+1}^A$ respectivement, le poids affecté à l'échantillon du présent $I_t^P$ étant fixé à la valeur 1.

Le dénominateur de la formule (1) est un facteur de normalisation dont la présence est fondée sur le fait que la somme des poids que l'on applique aux différents échantillons doit être égale à 1 pour que la moyenne du signal filtré $P_t^A$ soit égale à la moyenne du signal bruité $I_t^P$.

Le procédé de filtrage temporel est fondé sur une combinaison linéaire des échantillons causals et anticausals, avec l'échantillon du présent, dans laquelle les poids $b_j^C$ et $b_{t+1}^A$, affectés aux échantillons causals et anticausal ont une forme spécifique.

Le poids affecté à un échantillon causal donné est une probabilité de continuité d'intensité entre ledit échantillon causal donné et l'échantillon du présent.

D'une manière générale, la formulation du poids causal $b_{t-k}^C$ à affecter à un échantillon causal $I_{t-k}^C$ est donnée par la relation (2) :

$$b_{t-k}^C = \prod_{j=t-k+1}^{j=t} \alpha_j^C, \text{ avec } k \rangle 1 \qquad (2)$$

où $\alpha_j^C$ est la probabilité de continuité d'intensité entre les échantillons causals successifs depuis $I_{t-k}^C$ jusqu'à $I_t^P$. La relation (2) exprime qu'un poids $b_{t-k}^C$ relatif à un échantillon causal $I_{t-k}^C$ est égal au produit de toutes les probabilités de continuité d'intensité $\alpha_j^C$ depuis l'instant causal j=t-k+1 jusqu'à l'instant du présent t.

Ainsi, la détermination du poids affecté à un échantillon causal donné de la formulation (1) est fondée sur l'hypothèse que ledit échantillon donné est retenu et pris en compte dans la combinaison linéaire seulement dans la mesure où il n'est pas trop différent de l'échantillon du présent, cela signifiant qu'il appartient au même objet.

Selon cette hypothèse, par exemple, la formulation du poids causal b, relatif à l'échantillon causal $I_{t-1}^C$, se fait en écrivant que $b_{t-1}^C$ est une fonction de la valeur absolue de la différence $|I_t^P - I_{t-1}^C|$, ou mieux $b_{t-1}^C$ est une fonction de la différence :

$$\Delta^C = |I_t^P - P_{t-1}^C| \qquad (6^C)$$

où $P_{t-1}^C$ est l'échantillon déjà filtré à l'instant précédent t-1, et donc réputé moins bruité que I du fait du filtrage. Si la différence entre les échantillons $I_{t-1}^C$ et $P_{t-1}^C$ est faible, on affecte au poids correspondant $b_{t-1}^C$ une valeur "élevée"

proche de 1. Si cette différence est grande, alors on affecte au poids $b_{t-1}^C$ une valeur proche de 0 (zéro). Dans ce cas, l'échantillon $I_{t-1}^C$ n'est pratiquement pas pris en compte.

Ensuite, dans cet exemple, la formulation du second poids $b_{t-2}^C$ causal relatif à l'échantillon causal $I_{t-2}^C$ se fait en écrivant que le poids $b_{t-2}^C$ est une fonction non seulement de la différence entre l'échantillon à l'instant t et l'échantillon à l'instant t-1, mais aussi est une fonction de la différence entre l'échantillon à l'instant t-1, et l'échantillon à l'instant t-2. Ainsi, le poids $b_{t-2}^C$ a une valeur élevée proche de 1, si on ne prend en compte que des échantillons n'ayant pas subi de modifications autres que celles dues au bruit par rapport à l'échantillon du présent $I_t^P$, c'est-à-dire si l'on pose comme condition que les différences entre les échantillons pris en compte sont faibles. Ceci conduit à la formulation des poids causals $b_j^C$ comme des produits de fonctions des différences d'intensité apparaissant sur le signal temporel, c'est-à-dire à la formulation de ces poids comme des produits de probabilité de continuité d'intensité entre les échantillons précédant l'échantillon du présent à filtrer.

Ainsi, la formulation du poids causal relatif à l'échantillon $I_{t-1}^C$ est : $b_{t-1}^C = \alpha_t^C$ (2$a$) où la fonction $\alpha_t^C$ est une probabilité de continuité d'intensité entre l'échantillon du présent $I_t^P$ et l'échantillon filtré $P_{t-1}^C$. La continuité d'intensité entre l'échantillon à l'instant t et l'échantillon à l'instant précédent t-1 se traduit par une probabilité de continuité $\alpha_t^C$ forte. Et une discontinuité d'intensité entre les échantillons se traduit par $\alpha_t^C$ proche de 0.

La formulation du poids causal relatif à l'échantillon $I_{t-2}^C$ est : $b_{t-2}^C = \alpha_t^C \times \alpha_{t-1}^C$ (2$b$) où $\alpha_{t-1}^C$ est la probabilité de continuité d'intensité entre l'échantillon à l'instant t-1 et l'échantillon à l'instant t-2.

La continuité d'intensité des échantillons entre l'instant t et l'instant t-2 implique la continuité d'intensité entre les instants t et t-1, et la continuité d'intensité entre les instants t-1 et t-2, ce qui se traduit par le produit de probabilités (2b) dans lequel la probabilité de continuité d'intensité entre les instants t et t-1 est forte, et la probabilité de continuité d'intensité entre les instants t-1 et t-2 est forte.

La formulation du poids causal relatif à l'échantillon $I_{t-3}^C$ est ensuite : $b_{t-3}^C = \alpha_t^C \times \alpha_{t-1}^C \times \alpha_t^C$ (2$c$) etc.

Ainsi dans l'exemple de la FIG.3A, du fait de la discontinuité d'intensité D entre les échantillons $I_{t-3}^C$ et $I_{t-1}^C$, la probabilité de continuité $\alpha_{t-2}^C$ est très proche de 0 (zéro). Le poids $b_{t-3}^C$ obtenu par le produit des probabilités incluant cette probabilité $\alpha_{t-2}^C$ tend également vers zéro. Ensuite le poids $b_{t-4}^C$ tend aussi vers zéro du fait que sa formulation est un produit contenant aussi cette probabilité proche de zéro. Dès qu'il y a une probabilité proche de zéro dans le produit des probabilités fournissant un poids $b_j^C$, la présence de cette probabilité annule ce produit et tous les produits correspondant aux instants qui précèdent l'instant où cette probabilité proche de zéro apparaît. Il en résulte que les poids $b_j^C$ des échantillons causals correspondant auxdits instants précédents sont aussi proches de zéro. Dans l'exemple particulier de la FIG.3A, les poids causals sont : $b_{t-1}^C \simeq 1$ ; $b_{t-2}^C \simeq 1$ ; $b_{t-3}^C \simeq 0$ ; $b_{t-4}^C \simeq 0$

La formulation du poids anticausal $b_{t+1}^A$, relatif à l'échantillon du futur, est une fonction de la valeur absolue d'une différence d'intensité, notée $\Delta^A$, et est donnée par :

$$b_{t+1}^A = \alpha_t^A \qquad (2')$$

où $\alpha_t^A$ a une valeur particulière qui sera décrite en détail plus loin.

Il en résulte que, par cette formulation spécifique (2) et (2') des poids causals et anticausal, respectivement $b_j^C$ et $b_{t+1}^A$, l'équation (1), dont le calcul était très complexe, est transformée en deux groupes de chacun 3 relations simples, dont un premier groupe réalisant un filtrage récursif noté causal, et un second groupe réalisant un filtrage noté anticausal.

L'équation linéaire (1), dans laquelle les poids ont la forme spécifique (2) et (2'), conduit à une formulation d'une équation récursive (3$^C$) et d'une équation non récursive (3$^A$) formulées de la manière suivante :

$$P_t^C = P_{t-1}^C + K_t^C \times (I_t^P - P_{t-1}^C) \qquad (3^C)$$

$$P_t^A = P_t^C + K_t^A \times (I_{t+1}^A - P_t^C) \qquad (3^A)$$

La première équation récursive (3$^C$) appelée d'intégration causale, prend en compte l'échantillon filtré $P_{t-1}^C$ à l'instant t-1, modifié par ce qu'on appelle ci-après un terme d'innovation causal constitué par la différence entre l'échantillon filtré $P_{t-1}^C$ à l'instant t-1 et l'échantillon bruité $I_t^P$ observé à l'instant présent t. Ce terme d'innovation est multiplié par un terme appelé gain causal $K_t^C$, qui varie entre 0 et 1. Cette première équation (3$^C$) causale fournit une valeur filtrée $P_t^C$ appelée valeur filtrée causale, qui va être modifiée et améliorée par le filtrage résultant du calcul de la seconde équation (3$^A$).

La seconde équation non récursive (3$^A$), appelée anticausale, prend en compte l'échantillon filtré causal $P_t^C$ résultant de la première équation causale récursive (3$^C$), modifié par un terme d'innovation anticausal maintenant constitué par la différence entre l'échantillon $P_t^C$ filtré, résultant de l'équation récursive $(3^C)$, et l'échantillon bruité $I_{t+1}^A$ observé à l'instant du futur t+1. Ce terme d'innovation anticausal est multiplié par un terme appelé gain anticausal $K_t^A$ qui varie également entre 0 et 1.

Les gains $K_t^C$ et $K_t^A$ ne sont pas des gains de Kalman, mais des facteurs de gain complètement différents donnés respectivement par les équations respectivement récursive et non récursive suivantes $(4^C)$ et $(4^A)$ :

$$K_t^C = \frac{K_{t-1}^C}{K_{t-1}^C + \alpha_t^C} \qquad (4^C)$$

$$K_t^A = \frac{K_t^C}{K_t^C + 1/\alpha_t^A} \qquad (4^A) \text{ avec } K_t^A = 0 \text{ si } \alpha_t^A = 0$$

Dans le passage entre les équations (1), (2) et (2') et les équations $(4^C)$, $(5^C)$ et $(4^A)$, $(5^A)$, il faut remarquer que le gain causal $(K_t^C)$ est égal à l'inverse de la somme des poids causaux :

$$K_t^C = 1/\sum_{j=t-ko}^{j=t-1} b_j^C$$

et que , comme on l'a vu plus haut, le coefficient causal de probabilité de continuité $\alpha_t^C$ est le poids de l'échantillon causal $I_{t-1}^C$ précédant l'échantillon $I_t^P$ du présent :

$$\alpha_t^C = b_{t-1}^C$$

Le passage entre les équations (1) + (2) + (2') et les équations $(3^C)$ + $(3^A)$ est fondé sur le premier système d'équations causales récursives :

$$P_t^C = P_{t-1}^C + K_t^C \times (I_t^P - P_{t-1}^C) \text{ équation d'intégration causale} \qquad (3^C)$$

$$K_t^C = \frac{K_{t-1}^C}{K_{t-1}^C + \alpha_t^C} \text{ facteur de gain causal} \qquad (4^C)$$

et

$$\alpha_t^C = F^C \left(\frac{\Delta^C}{S_t^C}\right) \text{ coefficient causal de continuité} \qquad (5^C)$$

et sur le second système d'équations anticausales non récursives :

$$P_t^A = P_t^C + K_t^A \times (I_{t+1}^A - P_t^C) \text{ équation d'intégration anticausale} \qquad (3^A)$$

$$K_t^A = \frac{K_t^C}{K_t^C + 1/\alpha_t^A} \text{ facteur de gain anticausal} \qquad (4^A)$$

$$\alpha_t^A = F^A \left(\frac{\Delta^A}{S_t^C}\right) \text{ coefficient anticausal de continuité} \qquad (5^A)$$

où $\Delta^A$ représente la valeur absolue d'une différence d'intensité entre l'instant du futur t+1 et un second instant à considérer, soit l'instant du présent, soit un instant du passé ; où $S_t^C$ est un facteur de normalisation ; et où $F^C$ et $F^A$ sont des fonctions définies plus loin.

L'itération de l'équation ($3^C$) en commençant à t-ko dans le temps, et le calcul subséquent de l'équation ($3^A$), permettent de retrouver exactement l'équation (1), telle que formulée plus haut.

La formulation ($3^C$) + ($3^A$) des équations d'intégration correspond donc à cette combinaison linéaire des échantillons, associée à des poids spécifiques qui dépendent de la continuité des intensités entre les échantillons.

D'une manière générale, l'évaluation de l'échantillon causal filtré $P_t^C$ du présent est réalisée par l'itération de l'équation d'intégration causale ($3^C$) qui correspond à une combinaison linéaire des échantillons bruités causals et du présent, affectés de poids, un poids causal étant évalué comme une probabilité de continuité entre l'échantillon causal auquel ce poids est attribué et l'échantillon du présent, et le poids de l'échantillon bruité du présent étant fixé à 1. Pour évaluer un poids causal, la probabilité de continuité entre un échantillon causal donné et l'échantillon du présent peut être évaluée comme le produit des probabilités de continuité entre les échantillons successifs depuis l'échantillon donné jusqu'à l'échantillon du présent.

Par ailleurs, l'évaluation de l'échantillon anticausal filtré du présent $P_t^A$ est réalisée par le calcul de l'équation d'intégration anticausale ($3^A$) qui correspond à l'évaluation d'une combinaison linéaire entre l'échantillon causal filtré $P_t^C$ du présent et de l'échantillon bruité anticausal $I_{t+1}^A$ affecté de poids spécifiques.

En effet, l'équation (1) présentée plus haut peut être écrite aussi de la façon suivante :

$$P_t^A = \frac{(\sum_{j=t-ko}^{j=t-1} b_j^C)\ P_t^C + b_{t+1}^A \times I_{t+1}^A}{(\sum_{j=t-ko}^{j=t-1} b_j^C)\ + b_{t+1}^A}$$

On a déjà posé que :

$$b_{t+1}^A = \alpha_t^C \qquad\qquad (2')$$

$$1/\sum_{j=t-ko}^{j=t-1} b_j^C = K_t^C$$

En posant que :

$$\frac{b_{t+1}^A}{(\sum_{j=t-ko}^{j=t-1} b_J^C)\ + b_{t+1}^A} = \frac{\alpha_t^A}{(1/K_t^C)\ + \alpha_t^A} = K_t^A$$

On obtient l'expression linéaire de l'échantillon anticausal filtré :

$$P_t^A = (1-K_t^A)P_t^C + K_t^A \times I_{t+1}^A$$

dont les poids sont $(1 - K_t^A)$ pour $P_t^C$ et $K_t^A$ pour $I_{t+1}^A$

Le gain anticausal $K_t^A$ ne dépend ici que du coefficient anticausal de continuité $\alpha_t^A$, et de la somme des poids affectés aux échantillons entrant dans le filtrage linéaire causal.

Dans une généralisation de l'invention, l'échantillon filtré $P_t^C$ peut être fourni par tout procédé de filtrage linéaire, récursif ou non, dont l'inverse de la somme des coefficients fournit un facteur utilisé comme gain causal $K_t^C$.

## Formulation du coefficient de continuité causal $\alpha_t^A$

Le coefficient causal de continuité $\alpha_t^C$ est défini comme une fonction de la différence $\Delta^C = |I_t^P - P_{t-1}^C|$ $(6^C)$.

Il convient de déterminer si la différence $\Delta^C$ est relative à une discontinuité telle que D sur la FIG.3A, ou si elle est seulement relative à du bruit.

Pour déterminer la participation du bruit, la différence $\Delta^C$ est normalisée par un facteur $S_t^C$ prenant en compte la variance du bruit relative à chaque échantillon de cette discontinuité $\Delta^C$. L'écart type du bruit, noté $\sigma_B$, mesuré en niveaux d'intensité, pour chaque échantillon $I_j$, peut être estimé par toute méthode connue de l'état de la technique, ou bien peut être estimé a priori.

Selon une méthode proposée à titre d'exemple pour la détermination de l'écart type du bruit $\sigma_B$, en référence avec la FIG.3C, un signal bruité est représenté par la courbe $I(\tau)$ ; la moyenne de l'amplitude de ce signal est approximativement sa moyenne arithmétique $m_B$ évaluée sur un nombre N d'échantillons, donc entre l'instant présent j=t par exemple et l'instant j=t-N+1 dans le passé, en prenant en compte les échantillons bruitées $I_{t-N+1}^C$ ... $I_t^P$ ; d'où la moyenne recherchée

$$m_B \simeq \frac{1}{N} \sum_{j=t-N+1}^{j=t} I_j \qquad (8^C)$$

L'écart type du bruit $\sigma_B$ est l'écart moyen que fait un signal bruité par rapport à sa moyenne $m_B$. La variance du bruit, notée $\sigma_B^2$, qui est la moyenne au carré des écarts d'intensité dus au bruit des N échantillons considérés, par rapport à la moyenne $m_B$, peut être calculée par la relation :

$$\sigma_B^2 \simeq \frac{1}{N} \sum_{j=t-N+1}^{j=t} (I_j - m_B)^2 \qquad (9^C)$$

L'écart type du bruit $\sigma_B$ est alors obtenu par le calcul de la racine carrée de la variance du bruit :

$$\sigma_B = \sqrt{\frac{1}{N} \sum_{j=t-N+1}^{j=t} (I_j - m_B)^2} \qquad (10^C)$$

Selon l'invention, la variance de la contribution du bruit entrant dans la différence $\Delta^C$ est formulée par :

$$\sigma_B^2 \times \frac{2}{2 - K_{t-1}^C}$$

en régime stationnaire ; cette valeur est utilisée comme une approximation pour la normalisation de $\Delta^C$. Le facteur de normalisation de la différence $\Delta^C$ est alors donnée par la relation :

$$S_t^C = \sigma_B \sqrt{\frac{2}{2 - K_{t-1}^C}} \qquad (11^C)$$

Dans l'équation $(5^C)$, le coefficient de discontinuité $\alpha_t^C$ est donc une fonction d'une différence $\Delta C$ donnée par la relation $(6^C)$, normalisée par une approximation $S_t^C$ de l'écart type du bruit $\sigma_B$, pour prendre en compte le fait que la différence $\Delta^C$ est affectée par le bruit. A cet effet, le calcul du coefficient $\alpha_t^C$ comprend donc la détermination de l'écart du bruit $\sigma_B$ par rapport à la moyenne.

La force du procédé de filtrage proposé selon l'invention fondé sur la calcul de la fonction d'intégration causale $(3^C)$, associée aux relations $(4^C)$ et $(5^C)$ réside tout particulièrement dans le fait que l'expression $\alpha_t^C$ est normalisée comme proposé. Puisque l'on a pris en compte, pour cette normalisation non seulement la variance du bruit de l'échantillon du présent $I_t^P$ mais aussi la variance du bruit de l'échantillon filtré $P_{t-1}^C$, l'équation $(5^C)$ donnant le facteur de gain, permet une estimation du bruit résiduel pour chaque échantillon filtré.

La fonction d'intégration récursive ($3^C$) est maintenant aisément calculable car elle dépend uniquement du facteur de gain $K^C$ donné par l'équation ($4^C$). Ce facteur de gain $K^C_t$ dépend lui-même uniquement du facteur de gain $K^C_{t-1}$ déjà calculé dans le passé et du coefficient de continuité $\alpha^C_t$. Ce coefficient de continuité $\alpha^C_t$ dépend aussi du facteur de gain déjà calculé $K^C_{t-1}$, d'où il résulte que ce coefficient de continuité $\alpha^C_t$ doit être d'abord calculé, que l'équation de gain $K^C_t$ est ensuite aisément calculable avec le coefficient de continuité $\alpha^C_t$, et que l'échantillon causal filtré $P^C_t$ est ensuite aisément calculable par la relation ($3^C$).

### Définition de la fonction $F^C$

Pour le calcul de l'équation ($5^C$) donnant $\alpha^C_t$, la fonction $F^C$ est maintenant définie ci-après.
L'argument de la fonction $F^C$ est noté $z^C$ :

$$z^C = \frac{\Delta^C}{S^C_t} = \left| \frac{I^P_t - P^C_{t-1}}{\sqrt{\frac{2}{2-K^C_{t-1}}}} \right| \qquad (12^C)$$

La fonction $F^C(z^C)$ est tracée à titre d'exemple sur les FIG.6A à 6D en portant ses valeurs en ordonnée, et en portant z en abscisse.
La fonction $F^C(z^C)$ a d'abord une valeur constante $F^c$max lorsque $0 \leq z^C \leq 1$ ; puis la fonction $F^C(z^C)$ est décroissante jusqu'à une valeur $F^C$min pour $1 < z^C$. La valeur $F^C$max est telle que : $F^c$max $\leq 1$. La valeur $F^C$min est telle que $0 \leq F^C$min. Des exemples de telles fonctions $F^C(z^C)$ sont donnés ci-après.

Exemple I : illustré par la FIG.6A

La fonction $F^C(z^C)$ est constante et égale à une valeur $F^C$max = 1 quand $0 \leq z^C \leq 1$, puis la fonction $F^C(z^C)$ est choisie décroissante jusqu'à une valeur $F^C$min = 0 quand $1 \leq z^C$. La fonction $F^C(z^C)$ est avantageusement, dans cette région, de la forme d'une Gaussienne affectée d'un facteur de normalisation, telle que : quand $1 \leq z^C$, alors $F^C(z^C) = \exp\left(\frac{z^{C2}}{0{,}75}\right)$

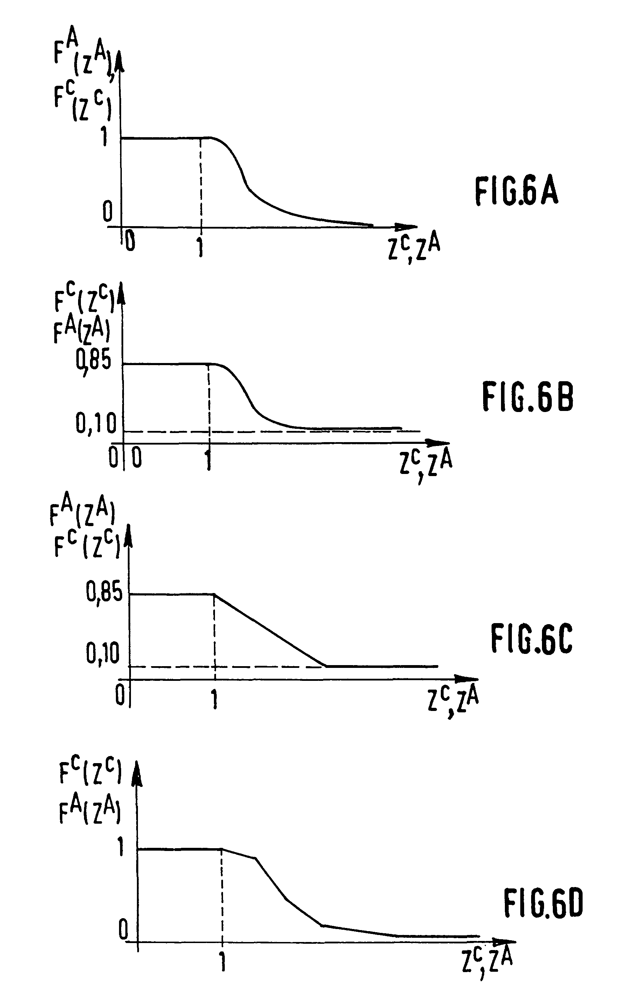

Exemple II : illustré par la FIG.6B

La fonction $F^C(z^C)$ est constante et égale à une valeur $F^c$max inférieure à 1, par exemple $F^C$max = 0,85 quand $0 \leq z^C < 1$ ; puis la fonction $F^C(Z^C)$ est décroissante quand $1 \leq z^C$. La fonction $F^C(z^C)$ est limitée en décroissance par exemple à = 0,10. La fonction $F^C(z^C)$ peut être, dans ce cas, une Gaussienne décalée.

Exemple III : illustré par la FIG.6C

La fonction $F^C(z^C)$ est constante et égale à une valeur $F^C$max inférieure à 1, mais proche de 1, telle que $F^C$max = 0,85 lorsque $0 \geq z^C \geq 1$. Puis la fonction $F^C(z)$ est linéairement décroissante jusqu'à une valeur $F$min proche de 0, par exemple $F^C$min = 0,10, qu'elle atteint par exemple pour $z^C = 2$.
Ensuite la fonction $F^C(z^C)$ est linéairement constante et égale à $F^C$min = 0,10 pour $2 < z^C$

Exemple IV : illustré par la FIG.6D

La fonction $F^C(z^C)$ est une fonction linéaire par morceaux qui est une approximation de la fonction de l'exemple I, ou bien de la fonction de l'exemple II.
La fonction $F^C(z^C)$ peut encore être choisie parmi d'autres formes appropriées dont la définition est à la portée de l'homme du métier.
La fonction $F^C(z)$ règle la puissance de filtrage. Lorsque $F^C$max = 1, la puissance de filtrage est maximale. Lorsque $F^C$max est inférieure à 1, la puissance de filtrage est légèrement limitée. Lorsque $F^C$min est supérieure à zéro, la puissance de filtrage n'est jamais nulle.
Le calcul du second système d'équations de filtrage anticausal, formé des relations ($3^A$), ($4^A$) et ($5^A$) présente une grande analogie avec le calcul des relations ($3^C$), ($4^C$) et ($5^C$) du système d'équations de filtrage causal.
Il est à noter simplement que la formulation de l'équation de gain anticausal $K^A_t$ est différente de la formulation de l'équation de gain causal $K^C_t$ du fait de la position particulière du coefficient anticausal de continuité $\alpha^A_t$ dans l'équa-

tion de gain $K_t^A$.

Comme on l'a montré plus haut relativement au filtrage causal, la force du procédé de filtrage anticausal tient particulièrement dans la manière de calculer le coefficient de continuité anticausal noté $\alpha_t^A$. On va donner ci-après deux formulations particulièrement avantageuses.

Formulation N°1 du coefficient de continuité $\alpha_t^A$

Dans cette première formulation, le coefficient anticausal de continuité est noté $\alpha_t^{A1}$. La différence d'intensité notée $\Delta^{A1}$ est évaluée entre l'intensité bruitée $I_{t+1}^A$ observée à l'instant du futur t+1, et l'intensité obtenue par filtrage causal $P_{t-1}^C$ au même pixel, dans l'image filtrée causale correspondant à l'instant t-1. La différence $\Delta^{A1}$ prend donc en compte des échantillons séparés par deux instants :

$$\Delta^{A1} = |I_{t+1}^A - P_{t-1}^C| \qquad (6^{A1})$$

Le coefficient de continuité N°1 est donné par

$$\alpha_t^{A1} = F^A \frac{(|I_{t-1}^A - P_{t-1}^C|)}{\sigma_B \sqrt{\dfrac{2}{2-K_{t-1}^C}}} = F^A \left(\frac{\Delta^{A1}}{S_t^C}\right) = F^A(Z^{A1}) \qquad (5^{A1})$$

avec $Z^{A1} = \Delta^{A1}/S_t^C$     $(12^{A1})$
où $F^A(Z^{A1})$ est une fonction appelée anticausale que l'on prendra du même type que la fonction $F^C(z^C)$ causale décrite plus haut.

Dans cette relation $(5^{A1})$, entrent des éléments déjà connus grâce au filtrage causal, $P_{t-1}^C$, $I_{t+1}^A$, $\sigma_B$ et $S_t^C$.

Après avoir calculé le coefficient de continuité anticausal $\alpha_t^{A1}$ selon la relation $(5^{A1})$, alors le gain $K_t^A$ est calculé selon la relation $(4^A)$, et finalement l'intensité filtrée $P_t^A$ à l'instant courant est fournie par le calcul de l'équation d'intégration $(3^A)$ anticausale, en prenant en compte l'intensité filtrée $P_t^C$, résultat du filtrage causal précédemment décrit, donné par le calcul de l'équation d'intégration $(3^C)$ causale.

Les FIG.4A, 4C montrent chacune un signal temporel filtré $P(\tau)$ obtenu à partir d'un signal temporel bruité I $(\tau)$ ayant au moins une discontinuité d'intensité D due à un mouvement, tel qu'illustré par la FIG.3A.

Ce filtrage est effectué au moyen du premier système de filtrage causal $(3^C)$, $(4^C)$, $(5^C)$ suivi du second système de filtrage anticausal $(3^A)$, $(4^A)$ en appliquant la première formulation $(5^{A1})$.

La FIG.4A montre le signal temporel filtré $P(\tau)$ dans les conditions où $F^A(Z^{A1})$ et $F^C(Z^C)$ sont chacune une fonction analogue à celle de l'exemple I illustrée par la FIG.6A.

En référence avec la FIG.4A, le filtrage causal produit un lissage du signal temporel, à gauche de la discontinuité D, dans le sens causal de t-3 vers t-ko ; ensuite, du fait de la discontinuité D, le filtrage causal n'est pas capable de réaliser le filtrage de l'échantillon bruité $I_{t-2}^C$ en t-2, car il a "oublié" le passé constitué par les échantillons $I_{t-3}^C$, $I_{t-4}^C$ etc ; de sorte que le filtrage causal est très efficace en $I_{t-3}^C$ de la courbe de signal temporel et à gauche de cet échantillon, puis le signal est directement le signal bruité $I_{t-2}^C$, en t-2, car en ce point, le filtrage causal ne fournit que l'intensité bruitée observée, non modifiée par les données du passé. Ensuite le filtrage causal produit un signal à nouveau lissé à droite de l'échantillon $I_{t-2}^C$, à partir du point suivant, en t-1, du signal temporel, où l'échantillon en t-2 peut être pris en compte du fait qu'il n'y a pas de discontinuité d'intensité entre les instants t-2 et t-1.

Donc, il reste après filtrage causal, la première dent de bruit en $I_{t-2}^C$ à l'instant t-2 du fait que le poids $b_{t-3}^C$ affectés au signal en t-3 est nul puisque la différence d'intensité entre t-2 et t-3 est grande.

Puis, du fait du filtrage anticausal, l'efficacité du filtrage est totale dès le point suivant t-1. Le fait de prendre en compte les données du signal $I_{t+1}^A$ anticausal, c'est-à-dire des données du futur, permet de mieux filtrer le signal dès le premier point sans discontinuité, en t-1 comme montré sur la FIG.4A.

Dans une variante de cette dernière forme de l'invention, on peut modifier à volonté la puissance de filtrage en modifiant les valeurs de $F^C$min, $F^C$max, $F^A$min, $F^A$max de manière à diminuer au mieux la dent d'intensité bruitée résiduelle, à droite de la discontinuité d'intensité D du signal temporel, tout en conservant un lissage aussi parfait que possible de ce signal temporel.

Ainsi, selon l'invention, le passé peut n'être oublié que "dans une certaine mesure", d'où il résulte que le filtrage causal peut n'être pas complètement nul en $I_{t-2}^C$.

En référence avec la FIG.4C qui est le résultat du filtrage du signal de la FIG.3A en utilisant des fonctions $F^C$ $(z^C)$ et $F^A(Z^{A1})$ ayant $F^A$max = $^C$max = 0,85 et $F^A$min = $F^C$min = 0,10, illustrées par la FIG.6B, on montre que la première dent de bruit en $I_{t-2}^C$ après la discontinuité D est amortie du fait que les fonctions $F^A(Z^{A1})$ et $F^C(z^C)$ ne sont jamais nulles, puisque dans cet exemple au moins égales à 0,10. Donc les données au temps t-3 sont toujours prises en compte et permettent de filtrer toujours dans une certaine mesure le signal au temps t-2, après la discontinuité d'intensité D.

En référence avec la FIG.3B, le signal temporel bruité $I(\tau)$ peut montrer aussi un pic de bruit D' par exemple apparaissant à l'instant t-2. Le filtrage causal ne permet pas de distinguer la discontinuité D' due à un pic de bruit dans le signal temporel bruité de la FIG.3B, de la discontinuité D due à un mouvement dans le signal temporel bruité de la FIG.3A. Le filtrage anticausal vient corriger cette déficience.

Du fait que, dans le filtrage anticausal, à l'instant t-2 où le sommet du pic de bruit $I_{t-2}^C$ doit être filtré, le coefficient de continuité $\alpha_t^{A1}$ est une fonction de la discontinuité d'intensité entre l'instant précédent t-3 et l'instant suivant t-1, le filtrage anticausal affecte en t-2, une intensité filtrée qui tient compte de l'intensité filtrée en t-3 et de l'intensité bruitée en t-1 qui sont proches l'une de l'autre.

Donc le pic de bruit D' est lissé par ce filtrage causal + anticausal à l'aide du coefficient de continuité N°1, comme montré sur la FIG.4B.

Formulation N°2 du coefficient de continuité $\alpha_t^{A2}$

Dans cette seconde formulation, le coefficient anticausal de continuité est noté $\alpha_t^{A2}$. La différence d'intensité notée $\Delta^{A2}$ est évaluée entre l'intensité bruitée $I_{t+1}^A$ observée à l'instant du futur t+1, et l'intensité obtenue par filtrage causal $P_t^C$ au même pixel, dans l'image du présent, à l'instant t. La différence $\Delta^{A2}$ prend donc en compte des échantillons séparés par seulement un instant.

$$\Delta^{A2} = |I_{t+1}^A - P_t^C| \qquad (6^{A2})$$

Le coefficient de continuité N°2 est donné par :

$$\alpha_t^{A2} = F^A \frac{(|I_{t+1}^A - P_t^C|)}{\sigma_B \sqrt{\dfrac{2}{2-K_{t-1}^C}}} = F^A \left(\frac{\Delta^{A2}}{S_t^C}\right) = F^A(Z^{A2}) \qquad (5^{A2})$$

avec $Z^{A2} = \Delta^{A2}/S_t^c$ $\qquad (12^{A2})$

où $F^A(Z^{A2})$ est une fonction appelée anticausale que l'on prendra du même type que la fonction $F^C(z^C)$ causale décrite plus haut.

Dans cette relation $(5^{A2})$ entrent des élément déjà connus grâce au filtrage causal : $P_t^C$, $I_{t+1}^A$, $\sigma_B$ et $S_t^C$.

Après avoir calculé le coefficient de continuité anticausal $\alpha_t^{A2}$ selon la relation $(5^{A2})$, alors le gain $K_t^A$ est calculé selon la relation $(4^A)$, et finalement l'intensité filtrée anticausale $P_t^A$ est fournie par le calcul de l'équation d'intégration $(3^A)$ anticausale, en prenant en compte l'intensité filtrée $P_t^C$, résultat du filtrage causal précédemment décrit, donné par le calcul de l'équation d'intégration $(3^C)$ causale.

Les FIG.5A, 5C montrent chacune un signal temporel filtré $P(\tau)$ obtenu à partir d'un signal temporel bruité $I(\tau)$ ayant au moins une discontinuité d'intensité D due à un mouvement, tel qu'illustré par la FIG.3A.

Ce filtrage est effectué au moyen du premier système de filtrage causal $(3^C)$, $(4^C)$, $(5^C)$ suivi du second système de filtrage anticausal $(3^A)$, $(4^A)$ en appliquant la seconde formulation $(5^{A2})$.

La FIG.5A montre le signal temporel filtré $P(\tau)$ dans les conditions où $F^A(Z^{A2})$ et $F^C(Z^C)$ sont chacune une fonction analogue à celle de l'exemple I illustrée par la FIG.6A.

En référence avec la FIG.5A, le filtrage causal produit le même lissage du signal temporel, que décrit en référence avec la FIG.4A.

Donc, il reste après filtrage causal, la première dent de bruit à l'instant t-2 du fait que le poids $b_{t-3}^C$ affecté au signal en t-3 est nul puisque la différence d'intensité entre t-2 et t-3 est grande.

Le filtrage anticausal vient corriger cette déficience. Le fait de prendre en compte les données du signal anticausal, c'est-à-dire des données arrivant dans le futur, permet de mieux filtrer le signal de cette dent de bruit à droite de la discontinuité D, comme montré sur la FIG.5A, et d'obtenir immédiatement en ce point $I_{t-2}^C$ un filtrage excellent.

L'utilisation de la formulation N°2 du coefficient de continuité $\alpha_t^{A2}$, ne permet pas de bien filtrer un pic de bruit D' tel que montré sur la FIG.3B si les fonctions choisies $F^A(Z^A)$ et $F^C(Z^C)$ sont celles de l'exemple I illustrées par les FIG.6A.

Mais, comme on a vu précédemment, on peut modifier la puissance de filtrage en modifiant les valeurs $FC_{min}$, $FC_{max}$, $FA_{min}$, $FA_{max}$.

Ainsi, considérant la FIG.5C qui est le résultat du filtrage du signal de la FIG.3B en utilisant des fonctions $F^C$ ($Z^C$) et $F^A(Z^{A2})$ ayant $FA_{max} = FC_{max} = 0,85$ et $FA_{min} = FC_{min} = 0,10$, illustrées par la FIG.6B, le pic de bruit D' est amorti du fait que les fonctions $F^A(Z^{A2})$ et $F^C(Z^C)$ ne sont jamais nulles, car les données au temps t-3 sont toujours prises en compte et permettent de filtrer toujours dans une certaine mesure le signal du pic de bruit D', au temps t-2.

Dans tous les cas, le filtrage temporel "avec futur", et avec la possibilité de choisir une puissance de filtrage adaptée comme selon l'invention, permet de traiter extrêmement efficacement le problème relatif à une discontinuité d'intensité du type de la discontinuité D ou un pic de bruit tel que D'.

### III/ Dispositif pour mettre en oeuvre le procédé

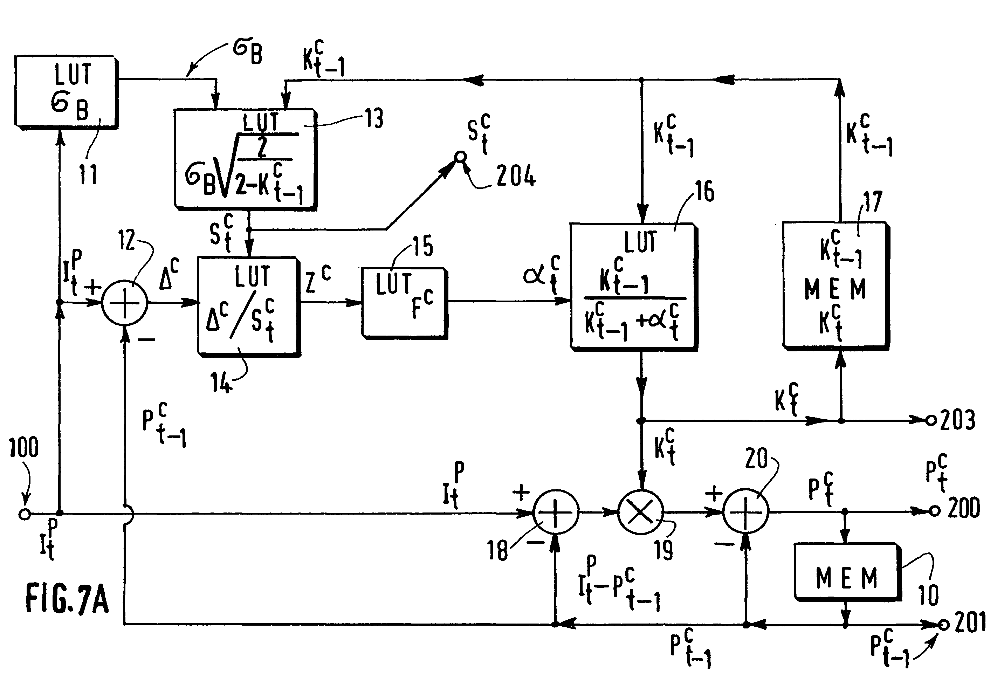

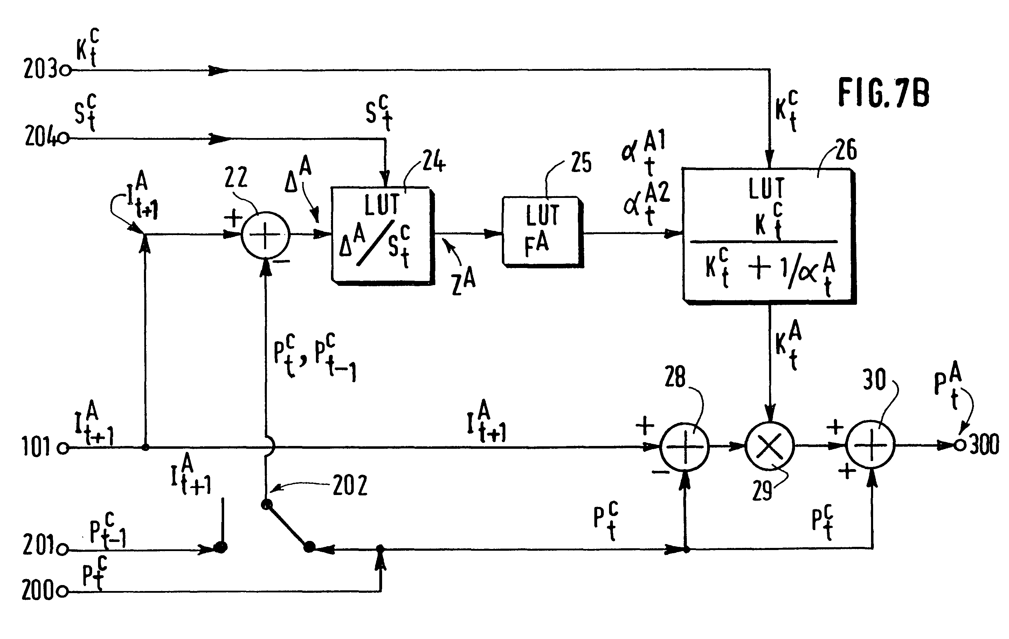

En référence avec les FIGs.7A, 7B, un dispositif simple pour mettre en oeuvre le procédé de filtrage précédemment décrit, est représenté sous forme de blocs fonctionnels. Ce dispositif comprend deux sous-ensembles principaux : un sous-ensemble causal pour effectuer le filtrage causal représenté sur la FIG.7A, et un sous-ensemble anticausal pour effectuer le filtrage anticausal représenté sur la FIG.7B.

L'intensité bruitée $I(\tau)$ est mesurée au pixel $A_j(x, y)$ de coordonnées x, y dans chacune des images $I_j$ de la séquence l'une après l'autre. Pour le traitement de l'image du présent observée à l'instant t, l'intensité bruitée $I^P_t$ est amenée à l'entrée 100 du dispositif, dans le sous-ensemble causal représenté sur la FIG.7A.

En référence avec la FIG.7A représentant le sous-ensemble causal, cette intensité bruitée du présent $I^P_t$ est d'abord amenée vers une fonction $\sigma_B$ tabulée, dans une Table LUT 11 (en anglais, LUT = L00K UP TABLE) qui fournit l'écart type du bruit $\sigma_B$ du signal bruité $I^P_t$. L'écart type du bruit $\sigma_B$ est disponible à la sortie de la table 11.

Les gains causals sont stockés dans une mémoire MEM 17. Cette mémoire MEM 17 a une sortie pour fournir les gains $K^C_{t-1}$ de l'instant précédent, pour chaque pixel, et a une entrée pour recevoir les gains $K^C_t$ calculés pour l'instant du présent t.

Le dispositif comprend une Table LUT 13 (LOOK UP TABLE) qui contient des valeurs tabulées pour fournir immédiatement la valeur de normalisation :

$$S^C_t = \sigma_B \sqrt{\frac{2}{2-K^C_{t-1}}} \qquad (11^C)$$

dès qu'on lui introduit la valeur de $\sigma_B$ venant de la Table LUT 11, et, la valeur du gain $K^C_{t-1}$ venant de la sortie de la mémoire MEM 17.

La valeur $S^C_t$ constitue le dénominateur de l'expression ($5^C$) qui permet le calcul du coefficient de continuité $\alpha^C_t$. Cette valeur de dénominateur $S^C_t$ est disponible à la sortie de la Table LUT 13 et est introduite dans la Table LUT 14 (LOOK UP TABLE).

Le dispositif comprend une seconde mémoire MEM 10 pour stocker les intensités filtrées aux différents instants pour chaque pixel traité.

A l'instant t, où l'on observe une image dont on cherche à calculer l'intensité causale filtrée $P^C_t$, la mémoire MEM 10 contient déjà l'intensité filtrée $P^C_{t-1}$ correspondant à l'instant précédent et fournit donc $P^C_{t-1}$ sur sa sortie 201.

L'intensité filtrée à l'instant précédent $P^C_{t-1}$ est amenée sur l'additionneur 12 en même temps que l'intensité bruitée $I^P_t$ observée à l'instant t provenant de l'entrée 100 du sous-ensemble causal. L'additionneur 12 calcule la différence entre les deux intensités, l'une bruitée à l'instant t notée $I^P_t$, l'autre filtrée à l'instant t-1, notée $P^C_{t-1}$ et fournit cette différence à sa sortie.

La Table LUT 14 prend la valeur absolue de la différence fournie par l'additionneur 12, et reçoit en outre le dénominateur $S^C_t$. La Table LUT 14 fournit alors, à sa sortie, l'argument $z^C$ de la fonction $F^C(z^C)$ :

$$\frac{\Delta^C}{S^C_t} \qquad (12^C)$$

La Table LUT 15 (LOOK UP TABLE) contient la fonction $F^C(z^C)$ choisie tabulée. Cette Table LUT 15 reçoit à son entrée l'argument $z^C$ et fournit le coefficient de continuité $\alpha^C_t$ donné par :

$$F^C \left(\frac{\Delta^C}{S^C_t}\right)$$

La Table LUT 16 contient la formulation tabulée pour fournir le gain $K_t^C$ à l'instant t à partir du gain $K_{t-1}^C$ de l'instant précédent, provenant de la mémoire MEM 17 et à partir du coefficient de continuité $\alpha_t^C$ arrivant de la Table LUT 15. Ce gain :

$$K_t^C = \frac{K_{t-1}^C}{K_{t-1}^C + \alpha_t^C} \qquad (4^C)$$

est fourni en sortie de la Table LUT 16, et est dirigé d'une part vers la mémoire MEM 17 pour remplacer la valeur du gain $K_{t-1}^C$ de l'instant précédent, et d'autre part vers un multiplicateur 19.

La fonction d'intégration causale $(3^C)$ peut maintenant être calculée.

L'additionneur 18 reçoit d'abord le signal bruité observé à l'instant t noté $I_t^P$ provenant de l'entrée 100, et le signal filtré à l'instant précédant t-1 provenant de la sortie 201 de la mémoire MEM 10. L'additionneur 18 fournit la différence :

$$I_t^P - P_{t-1}^C$$

Cette différence provenant de l'additionneur 18 est amenée sur le multiplicateur 19 en même temps que le gain $K_t^C$ provenant de la Table LUT 16. Le multiplicateur 19 effectue le produit :

$$K_t^C \times (I_t^P - P_{t-1}^C)$$

et en fournit le résultat à sa sortie.

L'additionneur 20 reçoit d'une part le produit venant du multiplicateur 19, et d'autre part le signal déjà filtré à l'instant précédent, noté $P_{t-1}^C$, provenant de la mémoire MEM 10. L'additionneur fournit à la sortie 200 du sous-ensemble causal, la valeur de l'intensité filtrée à l'instant t. Cette valeur filtrée $P_t^C$ vient aussi remplacer, dans la mémoire MEM 10, l'intensité filtrée à l'instant t-1.

Comme on l'a vu dans la description précédente du procédé de filtrage temporel, il n'est pas indispensable d'avoir recours au sous-ensemble causal décrit ci-dessus pour fournir un échantillon filtré du présent $P_t^C$. Tout filtre linéaire, qui peut être récursif ou non récursif, appliqué au signal temporel formé des échantillons bruités causals $I_j^C$ et de l'échantillon bruité du présent $I_t^P$ peut convenir. Le gain causal $K_t^C$ est alors pris égal à l'inverse de la somme des coefficients liés à un tel filtre linéaire.

Selon l'invention le sous-ensemble causal est utilisé de manière préférentielle. L'invention concerne spécifiquement le sous-ensemble anticausal décrit ci-après, ainsi que l'application de ce sous-ensemble anticausal à un premier sous-ensemble de filtrage linéaire récursif ou non récursif, fournissant une première valeur d'échantillon filtré du présent, qui sera améliorée par le filtrage anticausal.

En référence avec la FIG.7B, représentant le sous-ensemble anticausal, ce dispositif comprend d'abord une entrée 101 pour l'intensité bruitée $I_{t+1}^A$ mesurée à l'instant appelé du futur, aux coordonnées x, y dans l'image appelée du futur $J_{t+1}^A$, qui est la dernière observée de la séquence. Ce dispositif comprend en outre une entrée 200 pour l'intensité causale filtrée $P_t^C$ de l'instant du présent t fournie par le filtre linéaire ou par le sous-ensemble causal, une entrée 201 pour l'intensité filtrée $P_{t-1}^C$ de l'instant d'avant qui, dans l'exemple préférentiel est stockée dans la mémoire MEM 10 du sous-ensemble causal ; une entrée 203 pour le gain causal $K_t^C$ qui, dans l'exemple préférentiel est fournie par la LUT 16 du sous-ensemble causal ; et une entrée 204 pour la valeur du dénominateur $S_t^C$ qui, dans l'exemple préférentiel est fournie par la LUT 13 du sous-ensemble causal. Dans le cas où un filtre linéaire, autre que le sous-ensemble causal est utilisé, les valeurs $P_{t-1}^C$, $K_t^C$, et $S_t^C$ peuvent être stockées et fournies par tout moyen approprié connu de l'homme du métier.

Dans le sous-ensemble anticausal, les intensités filtrées $P_{t-1}^C$ de l'instant précédent, et $P_t^C$ sont gouvernées par une porte "OU" pour, avec l'intensité $I_{t+1}^A$ de l'instant du futur, entrer dans l'additionneur 22 qui fournit la valeur absolue de leur différence noté $\Delta^A$, qui peut donc avoir l'une des deux valeurs $\Delta^{A1}$ de la formule $(6^{A1})$ ou $\Delta^{A2}$ de la formule $(6^{A2})$.

La valeur absolue de la différence $\Delta^A$ est introduite avec le dénominateur $S_t^C$ dans une Table LUT 24 où le rapport $\Delta^A/S_t^C$ est tabulé, et qui fournit en sortie la valeur de l'argument $z^A$.

L'argument $z^A$ est alors introduit dans une Table LUT 25 qui contient la fonction $F^A(Z^A)$ tabulée et qui fournit en sortie soit le premier coefficient de continuité $\alpha_t^{A1}$ de la formule $(5^{A1})$ soit le second coefficient de discontinuité $\alpha_t^{A2}$ de la formule $(5^{A2})$ selon que l'on a introduit l'intensité filtrée à l'instant précédent $P_{t-1}^C$, ou de l'instant présent $P_t^C$ respectivement dans ce circuit de calculs.

**EP 0 751 483 B1**

Le coefficient de continuité calculé, $\alpha_t^{A1}$ ou $\alpha_t^{A2}$ est introduit, en même temps que le gain $K_t^C$ causal prélevé à l'entrée 203, dans une Table LUT 26 qui contient la fonction tabulée :

$$\frac{K_t^C}{K_t^C + 1/\alpha_t^A} \qquad (5^A)$$

permettant de prélever le gain anticausal $K_t^A$ à sa sortie.

La fonction d'intégration ($4^A$) anticausale est ensuite calculée. L'intensité filtrée causale $P_t^C$ du présent est amenée avec l'intensité bruitée $I_{t+1}^A$ sur l'additionneur 28 qui en calcule la différence. Cette différence est ensuite amenée avec le gain anticausal $K_t^A$, qui vient d'être calculé, sur un multiplicateur 29 ; puis le résultat de cette multiplication est additionné par l'additionneur 30 avec l'intensité causale filtré $P_t^C$. Le résultat de l'addition est l'intensité anticausale filtrée $P_t^A$, qui est le résultat du filtrage selon l'invention.

Ce filtrage est effectué pour les pixels à traiter de l'image courante $J_t^P$ et cette image est ainsi reconstruite avec un petit retard sur la dernière image observée $J_{t+1}^A$. Si la cadence de formation des images est de 1/30 seconde par exemple, ce retard n'est absolument pas perceptible.

On notera que le sous-ensemble causal utilisé de manière préférentiel tel que décrit plus haut ne nécessite la mémorisation que de l'échantillon causal filtré $P_{t-1}^C$ et du gain causal $K_{t-1}^C$ de l'instant antérieur à l'instant du présent et ne nécessite en outre que la valeur de l'intensité bruitée de l'instant du présent, laquelle n'a pas besoin d'être mémorisée. La variance du bruit $\sigma_B$ doit être fournie par une méthode appropriée afin de permettre la tabulation de $S_t^C$.

On notera par ailleurs que le sous-ensemble anticausal, objet particulier de l'invention, ne nécessite que la fourniture des valeurs $S_t^C$ qui peuvent être tabulées, à partir de la variance du bruit $\sigma_B$, la fourniture de l'échantillon bruité anticausal $I_{t+1}^A$ qui n'a pas besoin d'être mémorisé, la fourniture des échantillons filtrés $P_{t-1}^C$ et $P_t^C$ qui peuvent provenir d'une mémoire, et la fourniture du gain $K_t^C$ qui peut provenir d'une mémoire.

Après filtrage des différents pixels à traiter dans l'image du présent, cette image filtrée peut être rendue visible sur le moniteur 7 du dispositif d'affichage de la FIG.1 Les différentes images de la séquence peuvent ainsi être affichées après leur filtrage respectif.

## Revendications

1. Procédé de filtrage temporel du bruit dans une image ($J_t^P$) appelée image du présent, d'une séquence d'images en forme de matrice bidimensionnelle de pixels, lesquels ont des valeurs d'intensité, appelées échantillons, bruitées numérisées,

    ce procédé comprenant l'évaluation d'un échantillon filtré ($P_t^A$) appelé échantillon anticausal du présent pour reconstruire un échantillon bruité ($I_t^P$) correspondant à un pixel de localisation (x,y) donné dans l'image du présent, par une combinaison linéaire appelée anticausale d'un échantillon filtré du présent ($P_t^C$), appelé échantillon causal filtré du présent, obtenu par un filtrage temporel linéaire préliminaire, appelé causal associé à des coefficients ($b_j^C$) et d'un échantillon bruité ultérieur ($I_{t+1}^A$) audit échantillon bruité du présent ($I_t^P$), appelé échantillon bruité anticausal, ces échantillons ($P_t^C$, $I_{t+1}^A$) étant affectés de poids calculés respectivement comme des fonctions d'un facteur appelé facteur de gain causal ($K_t^C$) évalué comme l'inverse de la somme de coefficients associés au filtrage linéaire causal, et d'un coefficient appelé coefficient de continuité anticausal ($\alpha_t^A$) associé à l'échantillon anticausal ($I_{t+1}^A$) évalué comme une probabilité de continuité d'intensité entre ledit échantillon anticausal ($I_{t+1}^A$) et un échantillon filtré antérieur ($P_t^C$, $P_{t-1}^C$) dans la séquence.

2. Procédé selon la revendication 1, selon lequel pour l'évaluation de la combinaison linéaire anticausale, le poids affecté à l'échantillon bruité anticausal ($I_{t+1}^A$) est égal à un facteur appelé facteur de gain anticausal ($K_t^A$) et le poids affecté à l'échantillon filtré causal ($P_t^C$) est égal à 1 moins ledit facteur anticausal, ce facteur de gain anticausal étant lui-même obtenu par le rapport du coefficient de continuité anticausal ($\alpha_t^A$) sur la somme du facteur de gain causal ($K_t^C$) et dudit coefficient de continuité anticausal ($\alpha_t^A$).

3. Procédé selon la revendication 2, selon lequel pour la détermination de l'échantillon filtré ($P_t^A$) anticausal du présent, l'évaluation de la combinaison linéaire est réalisée en effectuant l'évaluation d'une relation non récursive, appelée relation d'intégration anticausale, comprenant la détermination de la somme de l'échantillon causal filtré du présent ($P_t^C$) et du produit du facteur de gain anticausal ($K_t^A$) par une différence entre l'échantillon bruité anticausal ($I_{t+1}^A$) et ledit échantillon causal filtré du présent ($P_t^C$).

4. Procédé selon la revendication 3, selon lequel, pour l'évaluation de l'équation d'intégration anticausale, ledit facteur

**15**

de gain anticausal ($K_t^A$) est évalué par le rapport du facteur de gain causal ($K_t^C$) sur la somme dudit facteur de gain causal ($K_t^C$) et de l'inverse dudit coefficient de continuité anticausal ($\alpha_t^A$).

**5.** Procédé selon la revendication 4, selon lequel l'évaluation de la relation d'intégration anticausale comprend :

la détermination d'une valeur absolue d'une différence d'échantillons appelée différence anticausale ($\Delta^{A1}$, $\Delta^{A2}$) entre l'échantillon anticausal bruité ($I_{t+1}^A$) et ledit échantillon causal filtré du présent ($P_t^C$), ou bien entre l'échantillon anticausal bruité ($I_{t+1}^A$) et l'échantillon causal filtré de l'instant précédent l'instant présent ($P_{t-1}^C$),
la détermination d'un coefficient anticausal de continuité ($\alpha_t^A$) comme une fonction décroissante ($F^A$) de ladite différence anticausale ($\Delta^{A1}$, $\Delta^{A2}$).

**6.** Procédé selon la revendication 5, selon lequel, pour l'évaluation du coefficient de continuité anticausal ($\alpha_t^A$), la fonction décroissante ($F^A$) est une fonction appelée anticausale dont l'argument ($Z^A$) est donné par ladite différence anticausale ($\Delta^{A1}$, $\Delta^{A2}$) normalisée par un facteur ($S_t^C$) égal à la racine carrée du cumul des variances du bruit des échantillons de la différence par rapport à la moyenne du bruit.

**7.** Procédé selon la revendication 6, selon lequel, la fonction décroissante anticausale ($F^A$) a une valeur maximale ($F^A_{max}$) inférieure ou égale à 1 lorsque son argument ($Z^A$) varie de 0 à 1, et décroît vers une valeur minimale ($F^A_{min}$) lorsque son argument est supérieur à 1.

**8.** Procédé selon la revendication 7, selon lequel la puissance de filtrage est réglée par les valeurs maximale et minimale de la fonction décroissante anticausale ($F^A(Z^A)$) choisies pour lisser les pics de bruit et les dents de bruits résiduelles.

**9.** Procédé selon l'une des revendication 1 à 9, selon lequel le filtrage linéaire causal préliminaire comprend :

l'évaluation d'un échantillon filtré ($P_t^C$) appelé échantillon causal filtré du présent, pour reconstruire l'échantillon bruité ($I_t^P$) correspondant au pixel de localisation (x,y) donné, dans l'image du présent, par une combinaison linéaire de l'échantillon bruité du présent ($I_t^P$) et des échantillons antérieurs dans la séquence, appelés échantillons causals bruités ($I_j^C$) affectés de poids ($b_j^C$) qui sont des coefficients de probabilité de continuité d'intensité, de 0 (zéro) à 1, entre ledit échantillon causal bruité auquel le poids est affecté et l'échantillon bruité du présent, le poids affecté à l'échantillon bruité du présent ayant la valeur 1.

**10.** Procédé selon la revendication 9, selon lequel le poids affecté à un échantillon bruité causal donné est le produit des coefficients de probabilité de continuité entre les échantillons causals bruités successifs, de l'échantillon bruité causal donné jusqu'à l'échantillon bruité du présent, et procédé selon lequel la combinaison linéaire causal des échantillons bruités causals et du présent est normalisée par la somme des poids relatifs auxdits échantillons.

**11.** Procédé selon la revendication 10, selon lequel, pour l'évaluation de l'échantillon causal filtré ($P_t^C$) du présent (t), la combinaison linéaire est réalisée en effectuant l'évaluation d'une relation récursive, appelée relation d'intégration causale, comprenant la détermination d'une somme de l'échantillon causal filtré ($P_{t-1}^c$) de l'instant précédent (t-1) et du produit du facteur de gain causal ($K_t^c$), par une différence entre l'échantillon bruité du présent ($I_t^P$) et l'échantillon causal filtré ($P_{t-1}^c$) de l'instant précédent.

**12.** Procédé selon la revendication 11 selon lequel, ledit facteur ($K_t^c$) de gain causal de l'instant du présent (t) est évalué de manière récursive, par le rapport du facteur de gain causal ($K_{t-1}^c$) de l'instant précédent (t-1) sur la somme dudit facteur de gain causal ($K_{t-1}^c$) de l'instant précédent et d'un coefficient appelé coefficient de continuité causal ($\alpha_t^c$), ledit facteur de gain causal ($K^c$) étant l'inverse de la somme des poids affectés aux échantillons causals de la combinaison linéaire causale, et le coefficient de continuité causal ($\alpha_t^c$) étant le poids de l'échantillon causal ($I_{t-1}^c$) précédant l'échantillon bruité du présent ($I_t^P$).

**13.** Procédé selon la revendication 12, selon lequel l'évaluation de la relation d'intégration causale comprend :

la détermination de la valeur absolue d'une différence d'échantillons appelée différence causale ($\Delta^C$) entre l'échantillon bruité ($I_t^P$) de l'instant du présent (t) et l'échantillon causal filtré ($P_{t-1}^c$) de l'instant précédent (t-1), et la détermination du coefficient causal de continuité ($\alpha_t^c$) comme une fonction décroissante appelée causale ($F^C$) dont l'argument ($Z^C$) est donné par la différence causale ($\Delta^C$), normalisée par un facteur ($S_t^c$) égal à la racine carrée du cumul des variances du bruit de chacun des échantillons de la différence, par rapport à la moyenne du bruit.

**14.** Procédé selon la revendication 13, selon lequel la fonction décroissante causale ($F^C$) a une valeur maximale constante inférieure ou égale à 1 lorsque son argument ($z^C$) est compris entre 0 à 1, et décroît vers une valeur minimale égale ou supérieure à zéro, lorsque son argument est supérieur à 1, et selon lequel la puissance de filtrage causal est réglée par les valeurs maximale ($F^C_{max}$) et minimale ($F^C_{min}$) de la fonction décroissante causale ($F^C$) choisies pour lisser les pics de bruit, et pour lisser les dents de bruit qui suivent les discontinuités dues à un mouvement spatial.

**15.** Dispositif pour mettre en oeuvre un procédé de filtrage selon l'une des revendications 1 à 14, comprenant :

un système de traitement d'images (5) pour fournir une intensité numérisée bruitée ($I^P_t$) appelée échantillon du présent bruité, d'un pixel [$A_t(x,y)$] ayant une localisation donnée (x,y) dans une image ($J^P_t$) ayant la forme d'une matrice de pixels arrivant à cet instant du présent (t), et l'intensité bruitée ($I^A_{t+1}$) du pixel ultérieur au pixel du présent, appelé échantillon anti-causal de même localisation (x,y) dans la matrice de l'image ultérieure,
un premier sous-ensemble, appelé sous-ensemble causal, recevant à son entrée (100) l'échantillon bruité du présent ($I^P_t$), et ayant des moyens de filtrage linéaire avec des poids pour évaluer, et pour fournir à une sortie (200), une première valeur filtrée appelée échantillon causal filtré ($P^C_t$) de l'échantillon ($I^P_t$) du présent, à une autre sortie (201) un échantillon filtré ($P^C_{t-1}$) de l'instant précédent, et à une autre sortie (203) un facteur de gain causal ($K^C_t$) égal à l'inverse des poids de ce filtrage linéaire,
et un second sous-ensemble, appelé sous-ensemble anticausal recevant à une entrée (201), l'échantillon causal filtré de l'instant précédent ($P^C_{t-1}$), à une autre entrée (200) l'échantillon causal filtré ($P^C_t$) du présent, et à une autre entrée (101) l'échantillon anticausal bruité ($I^A_{t+1}$), et ayant des moyens de calcul pour évaluer avec le facteur de gain causal ($K^C_t$) la relation d'intégration anti-causale et pour fournir à sa sortie (300) une seconde valeur appelée échantillon anticausal filtré ($P^A_t$) qui est l'échantillon filtré pour reconstruire l'échantillon du présent bruité ($I^P_t$).

**16.** Dispositif selon la revendication 15, comprenant des moyens d'évaluation de la variance du bruit des échantillons traités, et comprenant en outre, dans le sous-ensemble anticausal, pour l'évaluation de la relation anticausale :

un additionneur (22) pour la détermination de la valeur absolue d'une différence d'échantillons appelée différence anticausale ($\Delta^{A1}, \Delta^{A2}$) entre l'échantillon anticausal bruité ($I^A_{t+1}$) et ledit échantillon causal filtré ($P^C_t$) de l'instant du présent (t) ou bien l'échantillon causal filtré ($P^C_{t-1}$) de l'instant précédent (t-1),
des tables (LUT 23, 24, 25) pour la détermination d'un facteur de discontinuité anticausal ($\alpha^A_t$) comme une fonction décroissante ($F^A$) de la différence anticausale ($\Delta^{A1}, \Delta^{A2}$) normalisée par le facteur ($S^C_t$) de la variance du bruit ($\alpha_B$),
une table (LUT 26) pour la détermination d'un facteur appelé facteur de gain anticausal ($K^A_t$) de l'instant du présent (t) égal au quotient du facteur de gain causal du présent ($K^C_t$) par la somme dudit facteur de gain causal du présent et de l'inverse dudit coefficient de discontinuité anticausal ($\alpha^{A1}_t$) de l'instant du présent (t),
des additionneurs (28, 30) et un multiplicateur (29) pour la détermination de la somme dudit échantillon causal filtré ($P^C_t$) du présent et du produit dudit facteur de gain anticausal ($K^A_t$) par une différence entre l'échantillon anticausal bruité ($I^A_{t+1}$) et l'échantillon causal filtré du présent ($P^C_t$).

**17.** Dispositif selon l'une des revendications 15 ou 16 dans lequel le premier sous-ensemble anticausal comprend, pour l'évaluation de la relation causale :

un additionneur (12) pour la détermination d'une valeur absolue d'une différence d'échantillons appelée différence causale ($\Delta^C$) entre l'échantillon bruité ($I^P_t$) de l'instant du présent (t) et l'échantillon causal filtré ($P^C_{t-1}$) de l'instant précédent (t-1), et des tables (LUT 13, 14, 15) pour la détermination d'un facteur de discontinuité ($\alpha^C_t$) causal comme une fonction décroissante ($F^C$) de la différence causale ($\Delta^C$) normalisée par un facteur ($S^C_t$) de la variance du bruit ($\alpha_B$),
une table (LUT 16) pour la détermination d'un facteur ($K^C_t$) appelé facteur de gain causal du présent (t) égal au quotient du facteur de gain causal ($K^C_{t-1}$) de l'instant précédent (t-1) par la somme dudit facteur de gain causal ($K^C_{t-1}$) et du coefficient de discontinuité causal ($\alpha^C_t$),
des additionneurs (18, 20) et multiplicateur (19) pour la détermination de la somme de l'échantillon causal filtré ($P^C_{t-1}$) de l'instant précédent (t-1) et du produit dudit facteur de gain causal ($K^C_t$) par une différence entre l'échantillon du présent bruité ($I^P_t$) et l'échantillon causal filtré ($P^C_{t-1}$) de l'instant précédent, donnant ainsi la valeur de l'échantillon causal filtré ($P^C_t$).

**18.** Dispositif incluant un dispositif selon l'une des revendications 5 à 17 pour l'aide à l'observation d'une image médicale, comprenant :

un système pour fournir des données d'une image sous forme de matrice bidimensionnelle de pixels ayant des valeurs d'intensité numérisées,
un système d'affichage pour l'affichage de l'image,
un système de traitement d'images ayant accès aux données d'image, et au système d'affichage.

**Claims**

**1.** A method for the temporal filtering of the noise in an image ($J_t^P$) which is referred to as a present image and forms part of a sequence of images in the form of a two-dimensional matrix of pixels which have digitized, noisy intensity values which are referred to as samples,
which method comprises the evaluation of a filtered sample ($P_t^A$), referred to as a present anti-causal sample, in order to reconstruct a noisy sample ($I_t^P$) corresponding to a pixel in a given location (x, y) in the present image by a linear combination, referred to as an anti-causal combination, of a present filtered sample ($P_t^C$), referred to as a present filtered causal sample, obtained by preliminary linear temporal filtering, referred to as causal and associated with coefficients ($b_j^C$) and of a noisy sample ($I_{t+1}^A$) which is later than said present noisy sample ($I_t^P$) and is referred to as an anti-causal noisy sample, said samples ($P_t^C$, $I_{t+1}^A$) being weighted by weights calculated as functions of a so-called causal gain factor ($K_t^C$), evaluated as the inverse of the sum of the coefficients associated with the causal linear filtering, and of a so-called anti-causal continuity coefficient ($\alpha_t^A$) associated with the anti-causal sample ($I_{t+1}^A$) evaluated as a probability of intensity continuity between said at anti-causal sample ($I_{t+1}^A$) and a preceding filtered sample ($P_t^C$, $P_{t-1}^C$) in the sequence.

**2.** A method as claimed in Claim 1, in which for the evaluation of the anti-causal linear combination the weight assigned to the anti-causal noisy sample ($I_{t+1}^A$) is equal to a so-called anti-causal gain factor ($K_t^A$) and the weight assigned to the causal filtered sample ($P_t^C$) is equal to 1 minus said anti-causal factor, said anti-causal gain factor itself being obtained by the ratio of the anti-causal continuity coefficient ($\alpha_t^A$) to the sum of the causal gain factor ($K_t^C$) and said anti-causal continuity coefficient ($\alpha_t^A$).

**3.** A method as claimed in Claim 2, in which for the determination of the present anti-causal filtered sample ($P_t^A$) the evaluation of the linear combination is performed by performing the evaluation of a non-recursive relation, referred to as an anti-causal integration relation, comprising the determination of the sum of the present filtered causal sample ($P_t^C$) and the product of the anti-causal gain factor ($K_t^A$) by a difference between the anti-causal noisy sample ($I_{t+1}^A$) and said present filtered causal sample ($P_t^C$).

**4.** A method as claimed in Claim 3, in which for the evaluation of the anti-causal integration equation said anti-causal gain factor ($K_t^A$) is evaluated by the ratio of the causal gain factor ($K_t^C$) to the sum of said causal gain factor ($K_t^C$) and the inverse of said anti-causal continuity coefficient ($\alpha_t^A$).

**5.** A method as claimed in Claim 4, in which the evaluation of the anti-causal integration relation comprises:

the determination of an absolute value of a so-called anti-causal difference ($\Delta^{A1}$, $\Delta^{A2}$) between the noisy anti-causal sample ($I_{t+1}^A$) and said present filtered causal sample ($P_t^C$), or between the noisy anti-causal sample ($I_{t+1}^A$) and the filtered causal sample of the instant ($P_{t-1}^C$) preceding the present instant,
the determination of a continuity anti-causal coefficient ($\alpha_t^A$) as a decreasing function ($F^A$) of said anti-causal difference ($\Delta^{A1}$, $\Delta^{A2}$).

**6.** A method as claimed in Claim 5, in which for the evaluation of the anti-causal continuity coefficient ($\alpha_t^A$) the decreasing function ($F^A$) is a so-called anti-causal function whose argument ($z^A$) is given by said anti-causal difference ($\Delta^{A1}$, $\Delta^{A2}$) normalized by a factor ($S_t^C$) equal to the square root of the cumulation of the variances of the noise of the samples of the difference with respect to the mean noise.

**7.** A method as claimed in Claim 6, in which the anti-causal decreasing function ($F^A$) has a maximum value ($F^A_{max}$) which is smaller than or equal to 1 when its argument ($z^A$) varies from 0 to 1, and decreases towards a minimum value ($F^A_{min}$) when its argument is larger than 1.

**8.** A method as claimed in Claim 7, in which the filtering power is controlled by the maximum and minimum values of the anti-causal decreasing function ($F^A(Z^A)$) chosen so as to smooth the noise peaks and the residual noise teeth.

**9.** A method as claimed in any one of the Claims 1 to 8, in which the preliminary causal linear filtering comprises:

the evaluation of a filtered sample ($P^C_t$), referred to as the present filtered causal sample, in order to reconstruct the noisy sample ($I^P_t$) corresponding to the pixel in the given location (x, y) in the present image by a linear combination of the present noisy sample ($I^P_t$) and previous samples in the sequence, referred to as noisy causal samples ($I^C_t$) weighted by weights ($b^c_j$) which are coefficients of the probability of intensity continuity, from 0 (zero) to 1, between said noisy causal sample whereto the weight is assigned and the present noisy sample, the weight assigned to the present noisy sample having the value 1.

**10.** A method as claimed in Claim 9, in which the weight assigned to a given causal noisy sample is the product of the continuity probability coefficients between the successive noisy causal samples, from the given causal noisy sample until the present noisy sample, and in which the causal linear combination of causal noisy and present samples is normalized by the sum of the weights relating to said samples.

**11.** A method as claimed in Claim 10, in which for the evaluation of the filtered causal sample ($P^C_t$) of the present (t) the linear combination is performed by performing the evaluation of a recursive relation, referred to as a causal integration relation, comprising the determination of the sum of the filtered causal sample ($p^c_{t-1}$) of the preceding instant (t-1) and the product of the causal gain factor ($K^c_t$) by a difference between the present noisy sample ($I^P_t$) and the filtered causal sample ($P^C_{t-1}$) of the preceding instant.

**12.** A method as claimed in Claim 11, in which said causal gain factor ($K^C_t$) of the present instant (t) is evaluated in a recursive manner by the ratio of the causal gain factor ($K^c_{t-1}$) of the preceding instant (t-1) to the sum of said causal gain factor ($K^c_{t-1}$) of the preceding instant and a so-called causal continuity coefficient ($\alpha^c_t$), said causal gain factor ($K^C_t$) being the inverse of the sum of the weights assigned to the causal samples of the causal linear combination, and the causal continuity coefficient ($\alpha^c_t$) being the weight of the causal sample ($I^C_{t-1}$) preceding the present noisy sample ($I^P_t$).

**13.** A method as claimed in Claim 12, in which the evaluation of the causal integration relation comprises:

the determination of the absolute value of a so-called causal difference ($\Delta^c$) between the noisy sample ($I^P_t$) of the present instant (t) and the filtered causal sample ($P^c_{t-1}$) of the preceding instant (t-1), and the determination of the causal coefficient of continuity ($\alpha^C_t$) as a decreasing function, referred to as a causal function ($F^c$), whose argument ($z^C$) is given by the causal difference ($\Delta^c$), normalized by a factor ($S^c_t$) equal to the square root of the cumulation of the variances of the noise of each of the samples of the difference with respect to the mean noise.

**14.** A method as claimed in Claim 13, in which the causal decreasing function ($F^C$) has a constant maximum value smaller than or equal to 1 when its argument ($z^C$) is between 0 and 1 and decreases to a minimum value equal to or larger than zero when its argument is larger than 1, and in which the causal filtering power is controlled by the maximum ($F^C_{max}$) and minimum ($F^C_{min}$) values of the causal decreasing function ($F^C$) which are chosen so as to smooth the noise peaks and to smooth the noise teeth which follow the discontinuities due to a spatial movement.

**15.** A device for carrying out a filtering method as claimed in any one of the Claims 1 to 14, comprising:

an image processing system (5) for supplying a noisy digitized intensity ($I^P_t$), referred to as a noisy present sample, of a pixel [$A_t(x,y)$] having a given location (x,y) in an image ($J^P_t$) in the form of a matrix of pixels arriving at said present instant (t), and the noisy intensity ($I^A_{t+1}$) of the pixel which is later than the present pixel, referred to as an anti-causal sample, of the same location (x,y) in the matrix of the later image, a first sub-assembly which is referred to as a causal sub-assembly, whose input (100) receives the present noisy sample ($I^P_t$) and which comprises linear filtering means with weights for evaluation and for delivering on one output (200) a first filtered value, referred to as a filtered causal sample ($P^c_t$), of the present sample ($I^P_t$), a filtered sample ($P^c_{t-1}$) of the preceding instant on another output (201), and a causal gain factor ($K^C_t$) equal to the inverse of the weights of this linear filtering on another output (203), and a second sub-assembly, referred to as an anti-causal sub-assembly, an input (201) of which receives the filtered causal sample of the preceding instant ($P^C_{t-1}$), a further input (200) of which receives the present filtered

causal sample ($P^c_t$), and another input (101) of which receives the noisy anti-causal sample ($I^A_{t+1}$), and comprises calculation means for evaluating the anti-causal integration relation with the causal gain factor ($K^C_t$) and for delivering on its output (300) a second value which is referred to as a filtered anti-causal sample ($P^A_t$) and constitutes the filtered sample for the reconstruction of the noisy present sample ($I^P_t$).

16. A device as claimed in Claim 15, comprising means for evaluating the variance of the noise of the samples treated, and also comprising, included in the anti-causal sub-assembly, the following elements for the evaluation of the anti-causal relation:

an adder (22) for determining the absolute value of a so-called anti-causal difference ($\Delta^{A1}$, $\Delta^{A2}$) between the noisy anti-causal sample ($I^A_{t+1}$) and said filtered causal sample ($P^c_t$) of the present instant (t), or the filtered causal sample ($P^c_{t-1}$) of the preceding instant (t-1),
tables (LUT 23, 24, 25) for determining an anti-causal discontinuity factor ($\alpha^A_t$) as a decreasing function ($F^A$) of the anti-causal difference ($\Delta^{A1}$, $\Delta^{A2}$) normalized by the factor ($S^c_t$) of the variance of the noise ($\alpha_B$),
a table (LUT 26) for determining a so-called anti-causal gain factor ($K^A_t$) of the present instant (t) which is equal to the quotient of the present causal gain factor ($K^C_t$) and the sum of said present causal gain factor and the inverse of said anti-causal discontinuity coefficient ($\alpha^{A1}_t$) of the present instant (t),
adders (28, 30) and a multiplier (29) for determining the sum of said filtered causal sample ($P^c_t$) of the present and the product of said anti-causal gain factor ($K^t_t$) and a difference between the noisy anti-causal sample ($I^A_{t+1}$) and the present filtered causal sample ($P^{CA}_t$).

17. A device as claimed in one of the Claims 15 or 16, in which the first anti-causal sub-assembly comprises, for the evaluation of the causal relation:

an adder (12) for determining an absolute value of a so-called causal difference ($\Delta^c$) between the noisy sample ($I^P_t$) of the present instant (t) and the filtered causal sample ($P^c_{t-1}$) of the preceding instant (t-1), and tables (LUT 13, 14, 15) for determining a causal discontinuity factor ($\alpha^c_t$) as a decreasing function ($F^c$) of the causal difference ($\Delta^C$) normalized by a factor ($S^C_t$) of the variance of the noise ($\alpha_B$),
a table (LUT 16) for determining a factor ($K^c_t$), referred to as a causal gain factor of the present (t), equal to the quotient of the causal gain factor ($K^c_{t-1}$) of the preceding instant (t-1) and the sum of said causal gain factor ($K^c_{t-1}$) and the causal discontinuity coefficient ($\alpha^C_t$),
adders (18, 20) and a multiplier (19) for determining the sum of the filtered causal sample ($p^c_{t-1}$) of the preceding instant (t-1) and the product of said causal gain factor ($K^c_t$) and a difference between the noisy present sample ($I^P_t$) and the filtered causal sample ($P^C_{t-1}$) of the preceding instant, thus producing the value of the filtered causal sample ($P^C_t$).

18. A device including a device as claimed in any one of the Claims 5 to 17 for observation of a medical image, comprising:

a system for supplying data of an image in the form of a two-dimensional matrix of pixels having digitized intensity values,
a display system for displaying the image,
an image processing system having access to the data of the image and to the display system.

**Patentansprüche**

1. Verfahren zur temporären Rauschfilterung in einem Bild ($J^P_t$), genannt aktuelles Bild, einer Bildfolge in Form von zweidimensionalen Matrizen aus Pixeln, die verrauschte, digitalisierte Intensitätswerte, genannt Muster, haben, wobei dieses Verfahren die Auswertung eines gefilterten Musters ($P^t_t$), genannt aktuelles gefiltertes anti-kausales Muster, beinhaltet, um ein verrauschtes Muster ($I^t_p$), das einem Pixel mit der gegebenen Position (x,y) in dem aktuellen Bild entspricht, durch eine lineare, genannt antikausale, Verknüpfung eines aktuellen gefilterten Musters ($P^t_C$), genannt gefiltertes aktuelles kausales Muster, das durch eine vorherige temporäre lineare, genannt kausale, Filterung erzielt wurde, dem Koeffizienten ($b^c_j$) zugeordnet sind, und eines späteren als das genannte aktuelle verrauschte Muster ($I^t_j$) verrauschten Musters ($I^A_{t+1}$), genannt verrauschtes antikausales Musters, wobei diesen Mustern ($P^C_t$, $I^A_{t+1}$) Gewichtungen zugeordnet sind, die jeweils als Funktionen eines kausaler Verstärkungsfaktor ($K^C_t$) genannten Faktors, der als der Kehrwert der Summe der bei der linearen kausalen Filterung zugeordneten Koeffizienten ausgewertet wird, und eines antikausaler Kontinuitätskoeffizient ($\alpha^A_t$) genannten Koeffizienten

berechnet werden, der dem antikausalen Muster ($I^A_{t+1}$) zugeordnet ist und als eine Wahrscheinlichkeit der Intensitätskontinuität zwischen dem genannten antikausalen Muster ($I^A_{t+1}$) und einem vorhergehenden gefilterten Muster ($P^C_t$, $P^C_{t-1}$) in der Folge ausgewertet wird.

2. Verfahren nach Anspruch 1, gemäß dem für die Auswertung der linearen antikausalen Verknüpfung die dem verrauschten antikausalen Muster ($I^A_{t+1}$) zugeordnete Gewichtung einem Faktor, genannt antikausaler Verstärkungsfaktor ($K^A_t$), entspricht und die dem kausalen gefilterten Muster ($P^C_t$) zugeordnete Gewichtung gleich 1 minus dem genannten antikausalen Faktor ist, wobei dieser antikausale Verstärkungsfaktor selbst durch das Verhältnis des antikausalen Kontinuitätskoeffizienten ($\alpha^A_t$) zur Summe des kausalen Verstärkungsfaktors ($K^C_t$) und des genannten antikausalen Kontinuitätskoeffizienten ($\alpha^A_t$) erzielt wird.

3. Verfahren nach Anspruch 2, gemäß dem für die Auswertung des aktuellen gefilterten antikausalen Musters ($P^A_t$) die Auswertung der linearen Verknüpfung erfolgt, indem eine nicht rekursive Beziehung, genannt antikausale Integrationsbeziehung, ausgewertet wird, was die Bestimmung der Summe des aktuellen gefilterten kausalen Musters ($P^C_t$) und des Produkts des antikausalen Verstärkungsfaktors ($K^A_t$) durch eine Differenz zwischen dem antikausalen verrauschten Muster ($I^A_t+1$) und dem genannten aktuellen gefilterten kausalen Muster ($P^C_t$) beinhaltet.

4. Verfahren nach Anspruch 3, gemäß dem für die Auswertung der antikausalen Integrationsgleichung der genannte antikausale Verstärkungsfaktor ($K^A_t$) ausgewertet wird durch das Verhältnis des kausalen Verstärkungsfaktors ($K^C_t$) zu der Summe des genannten kausalen Verstärkungsfaktors ($K^C_t$) und dem Kehrwert des genannten antikausalen Kontinuitätskoeffizienten ($\alpha^A_t$).

5. Verfahren nach Anspruch 4, gemäß dem die Auswertung der antikausalen Integrationsbeziehung Folgendes beinhaltet:

   die Bestimmung eines Absolutwerts einer Musterdifferenz, genannt antikausale Differenz ($\Delta^{A1}$, $\Delta^{A2}$), zwischen dem verrauschten antikausalen Muster ($I^A_{t+1}$) und dem genannten aktuellen kausalen gefilterten Muster ($P^C_t$), oder aber zwischen dem antikausalen verrauschten Muster ($I^A_{t+1}$) und dem kausalen gefilterten Muster ($P^C_{t-1}$) des dem aktuellen Zeitpunkt vorausgehenden Zeitpunkts,
   und die Bestimmung eines antikausalen Kontinuitätskoeffizienten ($\alpha^A_t$) als eine abnehmende Funktion ($F^A$) der genannten antikausalen Differenz ($\Delta^{A1}$, $\Delta^{A2}$).

6. Verfahren nach Anspruch 5, gemäß dem für die Auswertung des antikausalen Kontinuitätskoeffizienten ($\alpha^A_t$) die abnehmende Funktion ($F^A$) eine antikausal genannte Funktion ist, deren Argument ($z^A$) sich aus der genannten antikausalen Differenz ($\Delta^{A1}$, $\Delta^{A2}$) ergibt, die durch einen Faktor ($S^C_t$), der der Quadratwurzel der laufenden Summe der Varianzen des Rauschens der Muster der Differenz entspricht, im Verhältnis zum Mittelwert des Rauschens normalisiert wird.

7. Verfahren nach Anspruch 6, gemäß dem die abnehmende antikausale Funktion ($F^A$) einen Maximalwert ($F^A_{max}$) kleiner oder gleich 1 hat, wenn ihr Argument ($z^A$) zwischen 0 und 1 liegt, und die zu einem Minimalwert ($F^A_{min}$) hin abnimmt, wenn ihr Argument größer als 1 ist.

8. Verfahren nach Anspruch 7, gemäß dem die Filterungsleistung durch die Maximal- und Minimalwerte der abnehmenden antikausalen Funktion ($F^A(Z^A)$) geregelt wird, die so gewählt werden, dass Rauschspitzen und Restrauschzacken geglättet werden.

9. Verfahren nach einem der Ansprüche 1 bis 9, gemäß dem die lineare kausale vorherige Filterung Folgendes umfasst:

   die Auswertung eines gefilterten Musters ($P^c_t$), genannt aktuelles gefiltertes kausales Muster, um ein verrauschtes Muster ($I^p_t$), das einem Pixel mit der gegebenen Position (x,y) in dem aktuellen Bild entspricht, durch eine lineare Verknüpfung des aktuellen verrauschten Musters ($I^p_t$) und der vorherigen Muster, genannt verrauschte kausale Muster ($I^c_j$), in der Folge zu rekonstruieren, denen Gewichtungen ($b^c_j$) zugeordnet sind, die Koeffizienten der Wahrscheinlichkeit der Intensitätskontinuität von 0 (Null) bis 1 sind zwischen dem genannten verrauschten kausalen Muster, dem die Gewichtung zugeordnet ist, und dem aktuellen verrauschten Muster, wobei die dem aktuellen verrauschten Muster zugeordnete Gewichtung den Wert 1 hat.

10. Verfahren nach Anspruch 9, gemäß dem die einem gegebenen verrauschten kausalen Muster zugeordnete Gewichtung das Produkt der Koeffizienten der Wahrscheinlichkeit der Kontinuität zwischen den aufeinander folgenden verrauschten kausalen Mustern ist, von dem gegebenen verrauschten kausalen Muster bis zum aktuellen verrauschten Muster, und gemäß dem die lineare Verknüpfung der verrauschten kausalen und des aktuellen Musters durch die Summe der zu den genannten Mustern gehörigen Gewichtungen normalisiert wird.

11. Verfahren nach Anspruch 10, gemäß dem für die Auswertung des aktuellen (t) gefilterten kausalen Musters ($P_t^C$) die lineare Verknüpfung erfolgt, indem eine rekursive Beziehung, genannt kausale Integrationsbeziehung, ausgewertet wird, was die Bestimmung einer Summe des gefilterten kausalen Musters ($P_{t-1}^C$) zum vorhergehenden Zeitpunkt (t-1) und des Produkts eines Faktors, genannt kausaler Verstärkungsfaktor ($K_t^C$), durch eine Differenz zwischen dem aktuellen verrauschten Muster ($I_t^P$) und dem gefilterten kausalen Muster ($P_{t-1}^C$) zum vorhergehenden Zeitpunkt beinhaltet.

12. Verfahren nach Anspruch 11, gemäß dem der genannte kausale Verstärkungsfaktor ($K_t^C$) des aktuellen Zeitpunkts (t) rekursiv ausgewertet wird durch das Verhältnis des kausalen Verstärkungsfaktors ($K_{t-1}^C$) des vorhergehenden Zeitpunkts (t-1) zur Summe des genannten kausalen Verstärkungsfaktors ($K_{t-1}^C$) des vorhergehenden Zeitpunkts und eines Koeffizienten, genannt kausaler Kontinuitätskoeffizient ($\alpha_t^C$), wobei der genannte kausale Verstärkungsfaktor ($K_t^C$) der Kehrwert der Summe der den kausalen Mustern der linearen kausalen Verknüpfung zugeordneten Gewichtungen ist, und der kausale Kontinuitätskoeffizient ($\alpha_t^C$) die Gewichtung des kausalen Musters ($I_{t-1}^C$) ist, das dem aktuellen verrauschten Muster ($I_t^P$) vorausgeht.

13. Verfahren nach Anspruch 12, gemäß dem die Auswertung der kausalen Integrationsbeziehung Folgendes umfasst: .

die Bestimmung des Absolutwerts einer Musterdifferenz, genannt kausale Differenz ($\Delta^C$), zwischen dem verrauschten Muster ($I_t^P$) zum aktuellen Zeitpunkt (t) und dem kausalen gefilterten Muster ($P_{t-1}^C$) zum vorhergehenden Zeitpunkt (t-1)
und die Bestimmung des kausalen Kontinuitätskoeffizienten ($\alpha_t^C$) als eine abnehmende, genannt kausale, Funktion ($F^C$), deren Argument ($z^C$) sich aus der kausalen Differenz ($\Delta^C$) ergibt, die durch einen Faktor ($S_t^C$), der der Quadratwurzel der laufenden Summe der Varianzen des Rauschens jedes der Muster der Differenz entspricht, im Verhältnis zum Mittelwert des Rauschens normalisiert wird.

14. Verfahren nach Anspruch 13, gemäß dem die abnehmende kausale Funktion ($F^C$) einen konstanten Maximalwert kleiner oder gleich 1 hat, wenn ihr Argument ($z^C$) zwischen 0 und 1 liegt, und die zu einem Minimalwert hin abnimmt, der gleich oder größer Null ist, wenn ihr Argument größer als 1 ist, und gemäß dem die Filterungsleistung durch die Maximal- ($F^C$max) und Minimalwerte ($F^C$min) der abnehmenden kausalen Funktion ($F^C$) geregelt wird, die so gewählt werden, dass Rauschspitzen geglättet werden und Rauschzacken, die aufgrund einer räumlichen Bewegung den Sprüngen folgen, geglättet werden.

15. Vorrichtung zur Durchführung eines Filterungsverfahrens gemäß einem der Ansprüche 1 bis 14, die Folgendes umfasst:

ein Bildverarbeitungssystem (5), das eine verrauschte digitalisierte Intensität ($I_t^P$), genannt aktuelles verrauschtes Muster, eines Pixels [$A_t(x,y)$] mit einer gegebenen Position (x,y) in einem Bild ($J_t^P$) in Form einer Matrize aus Pixeln liefert, die zu diesem aktuellen Zeitpunkt (t) eintrifft, und eine verrauschte Intensität ($I_{t+1}^A$) des auf den aktuellen Pixel folgenden Pixels, genannt antikausales Muster, der gleichen Position (x, y) in der Matrix des späteren Bildes liefert,
ein erstes Teilsystem, genannt kausales Teilsystem, das an seinem Eingang (100) das aktuelle verrauschte Muster ($I_t^P$) empfängt und über lineare Filterungsmittel mit Gewichtungen zum Auswerten verfügt, um an seinem Ausgang (200) einen ersten gefilterten Wert , genannt gefiltertes kausales Muster ($P_t^C$) des aktuellen Musters ($I_t^P$), an einem weiteren Ausgang (201) ein gefiltertes Muster ($P_{t-1}^C$) des vorhergehenden Zeitpunkts und an einem weiteren Ausgang (203) einen kausalen Verstärkungsfaktor ($K_t^C$) zu liefern, der dem Kehrwert der Gewichtungen dieser linearen Filterung entspricht,
und ein zweites Teilsystem, genannt antikausales Teilsystem, das an einem Eingang (201) das gefilterte kausale Muster des vorhergehenden Zeitpunkts ($P_{t-1}^C$), an einem weiteren Eingang (200) das aktuelle gefilterte kausale Muster ($P_t^C$) und an einem weiteren Eingang (101) das verrauschte antikausale Muster ($I_{t+1}^A$) empfängt und über Rechenmittel verfügt, um den kausalen Verstärkungsfaktor ($K_t^C$) der antikausalen Integrationsbeziehung auszuwerten, und an seinem Ausgang (300) einen zweiten Wert, genannt antikausales gefiltertes Muster ($P_t^A$) zu liefern, das das gefilterte Muster ist, um das aktuelle verrauschte Muster ($I_t^P$) zu rekonstruieren.

**16.** Vorrichtung nach Anspruch 15, die Mittel zum Auswerten der Varianz des Rauschens der verarbeiteten Muster und außerdem in dem antikausalen Teilsystem zur Auswertung der antikausalen Beziehung Folgendes umfasst:

eine Addiereinheit (22) zur Bestimmung eines Absolutwertes einer Musterdifferenz, genannt antikausale Differenz ($\Delta^{A1}$, $\Delta^{A2}$), zwischen dem antikausalen verrauschten Muster ($I_{t+1}^{A}$) und dem genannten gefilterten kausalen Muster ($P_t^{C}$) des aktuellen Zeitpunkts (t) oder des gefilterten kausalen Musters ($P_{t-1}^{C}$) des vorhergehenden Zeitpunkts (t-1),
Tabellen (LUT 23, 24, 25) zum Bestimmen eines antikausalen Kontinuitätsfaktors ($\alpha_t^{A}$) als abnehmende Funktion ($F^A$) der antikausalen Differenz ($\Delta^{A1}$, $\Delta^{A2}$), normalisiert durch einen Faktor ($S_t^{C}$) der Varianz des Rauschens ($\alpha_B$),
eine Tabelle (LUT 26) zum Bestimmen eines Faktors genannt antikausaler Verstärkungsfaktor ($K_t^{A}$), des aktuellen Zeitpunkts (t), der dem Quotienten des aktuellen kausalen Verstärkungsfaktors ($K_t^{C}$) durch die Summe des genannten aktuellen kausalen Verstärkungsfaktors und dem Kehrwert des genannten antikausalen Kontinuitätskoeffizienten ($\alpha_t^{A1}$) des aktuellen Zeitpunkts (t) entspricht,
Addiereinheiten (28, 30) und eine Multipl000000zereinheit (29) zum Bestimmen der Summe des genannten aktuellen gefilterten kausalen Musters ($P_t^{C}$) und des Produkts des genannten antikausalen Verstärkungsfaktors ($K_t^{A}$) und einer Differenz zwischen dem antikausalen verrauschten Muster ($I_{t+1}^{A}$) und dem gefilterten kausalen Muster ($P_t^{C}$).

**17.** Vorrichtung nach einem der Ansprüche 15 oder 16, in der das erste antikausale Teilsystem zur Auswertung der kausalen Beziehung Folgendes umfasst:

eine Addiereinheit (12) zur Bestimmung eines Absolutwertes einer Musterdifferenz, genannt kausale Differenz ($\Delta^{C}$), zwischen dem verrauschten Muster ($I_t^{P}$) des aktuellen Zeitpunkts (t) und dem gespeicherten gefilterten kausalen Muster ($P_{t-1}^{C}$) des vorhergehenden Zeitpunkts (t-1) und Tabellen (LUT 13, 14, 15) zum Bestimmen eines kausalen Kontinuitätsfaktors ($\alpha_t^{C}$) als abnehmende Funktion ($F^C$) der kausalen Differenz ($\Delta^{C}$), normalisiert durch einen Faktor ($S_t^{C}$) der Varianz des Rauschens ($\alpha_B$).
eine Tabelle (LUT 16) zum Bestimmen eines Faktors ($K_t^{C}$), genannt aktueller (t) kausaler Verstärkungsfaktor, der dem Quotienten des kausalen Verstärkungsfaktors ($K_{t-1}^{C}$) des vorhergehenden Zeitpunkts (t-1) entspricht, durch die Summe des genannten kausalen Verstärkungsfaktors ($K_{t-1}^{C}$) und des kausalen Kontinuitätskoeffizienten ($\alpha_t^{C}$),
Addiereinheiten (18, 20) und eine Multipl000000zereinheit (19) zum Bestimmen der Summe des gefilterten kausalen Musters ($P_{t-1}^{C}$) des vorhergehenden Zeitpunkts (t-1) und des Produkts des genannten kausalen Verstärkungsfaktors ($K_t^{C}$) mit einer Differenz zwischen dem aktuellen verrauschten Muster ($I_t^{P}$) und dem gefilterten kausalen Muster ($P_{t-1}^{C}$) des vorhergehenden Zeitpunkts, woraus sich der Wert des gefilterten kausalen Musters ($P_t^{C}$) ergibt.

**18.** Vorrichtung, die ein System gemäß einem der Ansprüche 5 bis 17 beinhaltet, das die Beobachtung eines medizinischen Bildes unterstützt und Folgendes umfasst:

ein System, das Daten eines Bildes in Form einer zweidimensionalen Matrix aus Pixeln mit digitalen Intensitätswerten liefert,
ein Anzeigesystem zur Anzeige des Bildes,
ein Bildverarbeitungssystem, das Zugriff auf die Bilddaten und das Anzeigesystem hat.

**FIG.1**

**FIG.2**

FIG.3A

FIG.3B

FIG.3C

FIG.4A

FIG.4B

FIG.4C

FIG.5A

FIG.5B

FIG.5C

FIG.6A

FIG.6B

FIG.6C

FIG.6D

**FIG.7A**

FIG.7B